(19) Europäisches Patentamt
European Patent Office
Office européen des brevets

(11) **EP 4 738 824 A1**

(12) **EUROPEAN PATENT APPLICATION**
published in accordance with Art. 153(4) EPC

(43) Date of publication:
**06.05.2026  Bulletin 2026/19**

(21) Application number: **24830666.4**

(22) Date of filing: **24.06.2024**

(51) International Patent Classification (IPC):
*H04N 19/172* *(2014.01)*

(52) Cooperative Patent Classification (CPC):
**H04N 13/161; H04N 19/172; H04N 19/52; H04N 19/597**

(86) International application number:
**PCT/CN2024/100840**

(87) International publication number:
**WO 2025/002021 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023  CN 202310795698**

(71) Applicant: **Vivo Mobile Communication Co., Ltd.
Dongguan, Guangdong 523863 (CN)**

(72) Inventors:
• **ZOU, Wenjie
Dongguan, Guangdong 523863 (CN)**
• **ZHANG, Wei
Dongguan, Guangdong 523863 (CN)**
• **YANG, Fuzheng
Dongguan, Guangdong 523863 (CN)**
• **LV, Zhuoyi
Dongguan, Guangdong 523863 (CN)**

(74) Representative: **Walaski, Jan Filip et al
Venner Shipley LLP
200 Aldersgate
London EC1A 4HD (GB)**

(54) **THREE-DIMENSIONAL MESH INTER-FRAME PREDICTION ENCODING METHOD AND APPARATUS, THREE-DIMENSIONAL MESH INTER-FRAME PREDICTION DECODING METHOD AND APPARATUS, AND ELECTRONIC DEVICE**

(57)    This application discloses a three-dimensional mesh inter-frame prediction encoding method, decoding method, and apparatus, and an electronic device, and belongs to the field of three-dimensional dynamic mesh encoding and decoding technologies. The encoding method in embodiments of this application includes: performing, by an encoder side, first processing on a to-be-encoded three-dimensional mesh, to obtain a basemesh; performing, by the encoder side, submesh division on the basemesh, to obtain a P submesh; determining, by the encoder side, a target encoding mode of a to-be-encoded mesh vertex in the P submesh and a first target motion vector prediction MVP value, where the first target MVP value is one of N MVP values included in a first candidate list, each MVP value in the first candidate list corresponds to one index, and N is an integer greater than 1; and encoding, by the encoder side, the target encoding mode and an index corresponding to the first target MVP value, to obtain a bitstream including first information, where the first information is used to indicate the target encoding mode and the index corresponding to the first target MVP value.

An encoder side performs first processing on a to-be-encoded three-dimensional mesh, to obtain a basemesh — 201

The encoder side performs submesh division on the basemesh, to obtain a P submesh — 202

The encoder side determines a target encoding mode and a first target MVP value of a to-be-encoded mesh vertex in the P submesh — 203

The encoder side encodes the target encoding mode and an index corresponding to the first target MVP value, to obtain a bitstream including first information, where the first information is used to indicate the target encoding mode and the index corresponding to the first target MVP value — 204

FIG. 2

**Description**

**CROSS-REFERENCE TO RELATED APPLICATIONS**

This application claims priority to Chinese Patent Application No. 202310795698.X, filed in China on June 30, 2023, which is incorporated herein by reference in its entirety.

**TECHNICAL FIELD**

This application belongs to the field of three-dimensional dynamic mesh encoding and decoding technologies, and specifically, to a three-dimensional mesh inter-frame prediction encoding method, decoding method, and apparatus, and an electronic device.

**BACKGROUND**

Over recent years, with the rapid development of multimedia technologies, a three-dimensional model becomes a new generation of digital media following audio, an image, and a video, and a three-dimensional mesh is a common three-dimensional model representation manner. Mesh decimation, mesh parameterization, and subdivision and deformation are performed on the three-dimensional mesh to obtain a basemesh. When the basemesh is encoded, the basemesh is divided into three types, namely, an I submesh, a P submesh, and a skip (Skip) submesh. For the P submesh, an inter-frame encoding mode is used, and submesh reference information and a motion vector (Motion Vector, MV) of each vertex need to be encoded. Currently, motion vector prediction is usually performed in a fixed manner. Such a prediction manner is not applicable to MVs of all vertexes, causing a case in which MV prediction of some vertexes is inaccurate.

**SUMMARY**

Embodiments of this application provide a three-dimensional mesh inter-frame prediction encoding method, decoding method, and apparatus, and an electronic device, to resolve a problem in the related art that accuracy of three-dimensional mesh inter-frame prediction is not high.

According to a first aspect, a three-dimensional mesh inter-frame prediction encoding method is provided, performed by an encoder side, and including:

performing, by the encoder side, first processing on a to-be-encoded three-dimensional mesh, to obtain a basemesh;
performing, by the encoder side, submesh division on the basemesh, to obtain a P submesh;
determining, by the encoder side, a target encoding mode of a to-be-encoded mesh vertex in the P submesh and a first target motion vector prediction MVP value, where the first target MVP value is one of N MVP values included in a first candidate list, each MVP value in the first candidate list corresponds to one index, and N is an integer greater than 1; and
encoding, by the encoder side, the target encoding mode and an index corresponding to the first target MVP value, to obtain a bitstream including first information, where the first information is used to indicate the target encoding mode and the index corresponding to the first target MVP value.

According to a second aspect, a three-dimensional mesh inter-frame prediction decoding method is provided, performed by a decoder side, and including:

obtaining, by the decoder side, a bitstream sent by an encoder side, where the bitstream includes a basemesh bitstream;
decoding, by the decoder side, a basemesh type of the basemesh bitstream, to obtain a P submesh bitstream including first information, where the first information is used to indicate a target encoding manner and an index corresponding to a first target MVP value;
determining, by the decoder side, a target encoding mode according to the first information, and determining the first target MVP value from a first candidate list according to the index corresponding to the first target MVP value, where the first candidate list includes N MVP values and an index corresponding to each MVP value, the first target MVP value is one of the N MVP values, and N is an integer greater than 1; and
decoding, by the decoder side, the P submesh bitstream according to the target encoding mode and the first target MVP value, to obtain an MV value of a to-be-decoded mesh vertex in a P submesh.

According to a third aspect, a three-dimensional mesh inter-frame prediction encoding apparatus is provided, including:

a processing module, configured to perform first processing on a to-be-encoded three-dimensional mesh, to obtain a basemesh;
a division module, configured to perform submesh division on the basemesh, to obtain a P submesh;
a first determining module, configured to determine a target encoding mode of a to-be-encoded mesh vertex in the P submesh and a first target motion vector prediction MVP value, where the first target MVP value is one of N MVP values included in a first candidate list, each MVP value in the first candidate list corresponds to one index, and N is an integer greater than 1; and
an encoding module, configured to encode the target encoding mode and an index corresponding to the first target MVP value, to obtain a bitstream including first information, where the first information is used to indicate the target encoding mode and the index corresponding to the first target MVP value.

According to a fourth aspect, a three-dimensional mesh inter-frame prediction decoding apparatus is provided, including:

an obtaining module, configured to obtain a bitstream sent by an encoder side, where the bitstream includes a basemesh bitstream;
a first decoding module, configured to decode a basemesh type of the basemesh bitstream, to obtain a P submesh bitstream including first information, where the first information is used to indicate a target encoding manner and an index corresponding to a first target MVP value;
a second determining module, configured to determine a target encoding mode according to the first information, and determine the first target MVP value from a first candidate list according to the index corresponding to the first target MVP value, where the first candidate list includes N MVP values and an index corresponding to each MVP value, the first target MVP value is one of the N MVP values, and N is an integer greater than 1; and
a second decoding module, configured to decode the P submesh bitstream according to the target encoding mode and the first target MVP value, to obtain an MV value of a to-be-decoded mesh vertex in a P submesh.

According to a fifth aspect, an electronic device is provided, including a processor and a memory, where the memory stores a program or instructions executable on the processor, and when the program or the instructions are executed by the processor, steps of the method according to the first aspect or the second aspect are implemented.

According to a sixth aspect, a readable storage medium is provided, storing a program or instructions, where when the program or the instructions are executed by a processor, steps of the method according to the first aspect or steps of the method according to the second aspect are implemented.

According to a seventh aspect, a chip is provided. The chip includes a processor and a communication interface, where the communication interface is coupled to the processor, and the processor is configured to run a program or instructions, to implement the method according to the first aspect, or implement the method according to the second aspect.

According to an eighth aspect, a computer program/program product is provided, where the computer program/program product is stored in a storage medium, and the program/program product is executed by at least one processor to implement the method according to the first aspect or implement the method according to the second aspect.

In this embodiment of this application, the encoder side is not limited to performing encoding in a fixed motion vector prediction manner, but can flexibly select the first target MVP value from the first candidate list to perform motion vector prediction, so that the encoder side encodes the motion vector of the P submesh in a more flexible manner, to help improve accuracy of inter-frame prediction for the P submesh by the encoder side, and also help improve encoding efficiency.

## BRIEF DESCRIPTION OF THE DRAWINGS

FIG. 1a is a flowchart of performing encoding by an encoder side in a V-DMC manner;
FIG. 1b is a flowchart of performing decoding by a decoder side in a V-DMC manner;
FIG. 2 is a flowchart of a three-dimensional mesh inter-frame prediction encoding method according to an embodiment of this application;
FIG. 3 is a flowchart of a three-dimensional mesh inter-frame prediction decoding method according to an embodiment of this application;

FIG. 4a is a decimated schematic diagram of a mesh in a three-dimensional mesh inter-frame prediction encoding method according to an embodiment of this application;

FIG. 4b is a flowchart of a conventional MV encoding scheme in a three-dimensional mesh inter-frame prediction encoding method according to an embodiment of this application;

FIG. 4c is a schematic diagram of MV prediction in a conventional MV encoding scheme;

FIG. 4d is a flowchart of an MV encoding scheme based on an MVP candidate list in a three-dimensional mesh inter-frame prediction encoding method according to an embodiment of this application;

FIG. 4e is a flowchart of resorting an MVP candidate list in an MV encoding scheme based on an MVP candidate list;

FIG. 4f is a schematic diagram of subdivision and deformation in a three-dimensional mesh inter-frame prediction encoding method according to an embodiment of this application;

FIG. 5a is a flowchart of a conventional MV decoding scheme in a three-dimensional mesh inter-frame prediction decoding method according to an embodiment of this application;

FIG. 5b is a flowchart of an MV decoding scheme based on an MVP candidate list in a three-dimensional mesh inter-frame prediction decoding method according to an embodiment of this application;

FIG. 6 is a structural diagram of a three-dimensional mesh inter-frame prediction encoding apparatus according to an embodiment of this application;

FIG. 7 is a structural diagram of a three-dimensional mesh inter-frame prediction decoding apparatus according to an embodiment of this application;

FIG. 8 is a structural diagram 1 of an electronic device according to an embodiment of this application; and

FIG. 9 is a structural diagram 2 of an electronic device according to an embodiment of this application.

## DETAILED DESCRIPTION

The technical solutions in embodiments of this application are clearly described below with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

The terms "first", "second", and the like in this application are intended to distinguish between similar objects rather than describe a specific sequence or order. It may be understood that the terms used in such a way is interchangeable in proper circumstances, so that the embodiments of this application can be implemented in other sequences than the sequence illustrated or described herein. In addition, objects distinguished by "first" and "second" are usually of a type, and a quantity of objects is not limited. For example, a quantity of first objects may be one or more than one. In addition, "or" in this application indicates at least one of connected objects. For example, "A or B" covers three solutions, that is, solution 1: including A and excluding B; solution two: including B and excluding A; and solution 3: including both A and B. A character "/" generally indicates an "or" relationship between the associated objects.

To better understand the technical solutions in this application, related concepts and principles that may be included in the embodiments of this application are described below.

With the rapid development of multimedia technologies, related research results are rapidly industrialized, and become an indispensable and important component in people's life. A three-dimensional model becomes a new generation of digital media following audio, an image, and a video. A three-dimensional mesh is a common representation manner of the three-dimensional model. Compared with conventional multimedia such as an image and a video, the three-dimensional mesh model is more interactive and realistic, so that the three-dimensional mesh model is increasingly widely applied to various fields such as commerce, manufacturing industry, building industry, education, medicine, entertainment, art, and military affairs.

Although there are many three-dimensional mesh representation methods currently, the three-dimensional mesh is still the most common representation method currently. The three-dimensional mesh may be considered as including three basic elements: vertexes, a side, and a surface. The vertexes are the most basic elements in a mesh, and the vertexes define positions in a three-dimensional space. The side is a line segment connecting two vertexes in the mesh. The surface may be considered as a polygon formed by closed paths of sides. For a triangular mesh, each surface is a triangle.

Information included in the mesh is usually classified into three types: geometrical information, connection information, and attribute information. The geometrical information is a position of each vertex in the mesh in the three-dimensional space. The connection information describes an association relationship between elements in the mesh, namely, a connection relationship between vertexes. The attribute information is optional, and may associate an attribute with a corresponding mesh element (for example, a vertex color, a normal vector, and the like may be associated with a mesh vertex). mesh parameterization may be further used to map a mesh from the three-dimensional space to a two-dimensional plane area. Such a mapping relationship is usually described by a set of parameter coordinates, which are referred to as UV coordinates or texture coordinates, and are associated with the mesh vertex. Two-dimensional mapping may be used to represent high-resolution attribute information, such as a texture and a normal vector.

In almost all application fields (such as calculation and simulation, entertainment, medical imaging, digital cultural relics, computer design, and e-commerce) in which the three-dimensional mesh is used, with an increasingly high requirement of people on a visual effect for the three-dimensional mesh model, the model is becoming increasingly complex, and accuracy of the model is also increasingly high. Therefore, a data amount needed for representing the three-dimensional mesh is also correspondingly increased. The foregoing problem leads to more complex processing, visualization, transmission, and storage of the three-dimensional mesh. Three-dimensional mesh compression may be considered as an approach to resolve the foregoing problem. The three-dimensional mesh compression reduces an amount of model data, and facilitates processing, storage, and transmission of the three-dimensional mesh. Therefore, it is necessary to provide an efficient and universal three-dimensional mesh compression algorithm.

Recently, an international standardization organization moving pictures experts group (Moving Pictures Experts Group, MPEG) in the field of audio and video encoding and compression starts to develop video-based dynamic mesh coding (Video-based dynamic mesh coding, V-DMC) oriented to a compression standard for the three-dimensional mesh. The standard is specified based on a conventional video-based visual volumetric video-based coding (Visual Volumetric Video-based Coding, V3C) standard. The V3C standard provides a general method for compressing the three-dimensional model. The model may be presented in a form such as a point cloud, a mesh, or a panoramic video. A three-dimensional mesh model compression method is compatible with the standard, which facilitates promotion and applicability of the method. Therefore, it is of great significance to optimize the three-dimensional mesh encoding/decoding method in the V-DMC and combine an optimization method with the V3C standard.

V3C standard:

The V3C standard provides a method for encoding and decoding various three-dimensional media through a video or image encoding technology. Specifically, before encoding, three-dimensional media content is converted from a three-dimensional representation into a plurality of two-dimensional representations (referred to as V3C components) through projection and the like, and then the two-dimensional representations are encoded through a conventional video or image encoding technology. The V3C components mainly include an occupation component, a geometrical component, and an attribute component. The occupation component may represent a case in which areas in the two-dimensional representation are associated with data in the three-dimensional representation. The geometrical component represents information related to a position of the three-dimensional data in the space. The attribute component may provide attribute information corresponding to the vertex, such as a material and a texture. In addition, the components further include information about how to reconstruct a three-dimensional model through the components, which is referred to as atlas (atlas) information. The atlas information is used to associate all the components, and additional information indicating that the two dimension is reconstructed into the three dimension is also included in an atlas component. An atlas includes a plurality of basic units, and the basic unit is referred to as a patch (patch). Each patch represents an area in an available two-dimensional component, and includes information needed for projecting the area back to a three-dimensional space.

V-DMC:

The V-DMC is a standard formulated by the MPEG for compressing the three-dimensional mesh. A main idea thereof is compressing the three-dimensional mesh by using the conventional V3C standard. Because the connection information in the three-dimensional mesh needs to be encoded, a specific encoding procedure of the connection information is slightly different from that of the V3C standard. Syntactic semantics and a decoding operation of a decoder side of the V3C standard need to be extended to support decoding and reconstruction of the three-dimensional mesh.

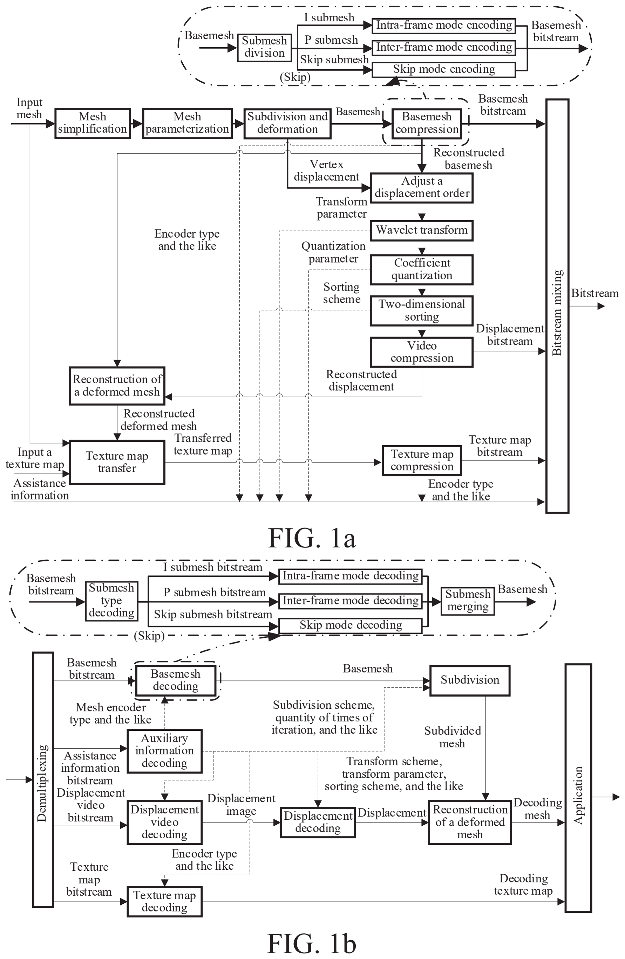

An overall framework of an encoder side is shown in FIG. 1a. An input mesh is first decimated through a decimation module, then new texture coordinates are generated for the mesh through mesh parameterization, and subsequently, subdivision and deformation are performed on the parameterized mesh. That is, a new vertex is inserted into the mesh according to a specific subdivision method and a distance between the vertex of the mesh obtained through subdivision and a nearest point of the input mesh is calculated, which is referred to as displacement information. Subsequently, a vertex position of the parameterized mesh, namely, the mesh obtained before subdivision and deformation, is adjusted according to the displacement information, and the adjusted mesh is referred to as a basemesh and is sent to a basemesh encoding module to compress the basemesh. When the basemesh is encoded, the basemesh is divided into three types of submeshes for encoding and decoding. For an I submesh, intra-frame mode encoding is used, to encode geometrical information, a connection relationship, and attribute information of the I submesh. For a P submesh, inter-frame mode encoding is used, and submesh reference information and a motion vector (Motion Vector, MV) of each vertex need to be encoded. For a skip submesh, encoding is performed in a skip mode, and only reference information needs to be encoded. The basemesh is reconstructed after encoding, and then a displacement order is adjusted according to a vertex order of the reconstructed basemesh. Subsequently, wavelet transform is first performed on vertex displacement information obtained after order adjustment, a transformed coefficient is quantized, then the quantized coefficient is packed into a two-dimensional image in a specific scanning order, and the two-dimensional image is encoded by using a video encoder. Then, the reconstructed displacement information is applied to the subdivided basemesh to obtain a reconstructed subdivided and deformed mesh. The mesh, the original input mesh, and a texture map corresponding to the original input mesh are input into a corresponding texture map transfer module, to obtain a texture map corresponding to the reconstructed mesh, and the texture map is also encoded by using the video encoder. Parameters used in an encoding process, such as a type of the used video encoder, a type of a mesh encoder, a transform parameter, and a quantization parameter, are transferred to the decoder side through auxiliary information.

An overall framework of the decoder side is shown in FIG. 1b. For a received bitstream, the decoder side first demultiplexes each partial bitstream, to respectively obtain a basemesh bitstream, a displacement video bitstream, a texture map video bitstream, and an auxiliary information bitstream. The basemesh bitstream is decoded by using the mesh decoder indicated by the auxiliary information to obtain the basemesh. Specifically, according to a submesh type identifier obtained through decoding, corresponding bitstream segments are respectively sent to decoders in different modes for decoding. Submeshes obtained through decoding are then merged and spliced, and the reconstructed basemesh is finally output. The displacement video bitstream and the texture map video bitstream are decoded through a video decoder. For a displacement part, after video decoding is performed, displacement further needs to be extracted from an image through the displacement decoding module, steps such as inverse quantization and inverse transform are performed, and then the displacement decoding module is applied to the subdivided basemesh, to obtain a deformed mesh reconstructed by the decoder side. After being decoded, the texture map is a texture map corresponding to the reconstructed deformed mesh. Subsequently, an application module or a rendering module uses the reconstructed deformed mesh and the texture map obtained through decoding as input for processing.

Currently, a fixed motion vector prediction manner is usually used in an inter-frame prediction method for a dynamic three-dimensional mesh, and a motion vector prediction value obtained in this manner is inaccurate, resulting in low inter-frame encoding efficiency. In view of the foregoing problem, an embodiment of this application provides a three-dimensional mesh inter-frame prediction method.

The following describes in detail the three-dimensional mesh inter-frame prediction encoding method and decoding method, and a related device provided in the embodiments of this application by using some embodiments and application scenarios thereof with reference to the accompanying drawings.

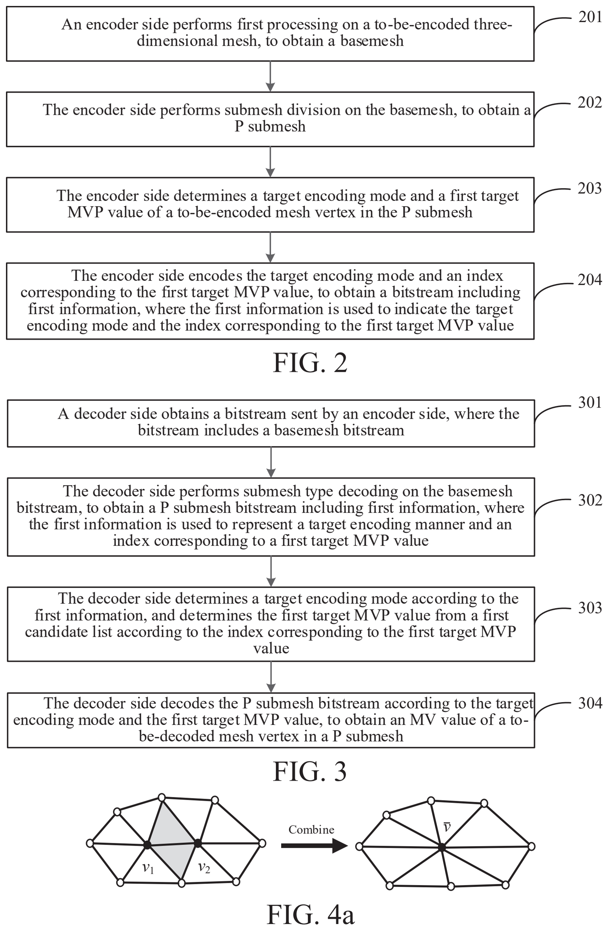

FIG. 2 is a flowchart of a three-dimensional mesh inter-frame prediction encoding method according to an embodiment of this application. The method is applied to an encoder side. As shown in FIG. 2, the method includes the following steps.

Step 201: An encoder side performs first processing on a to-be-encoded three-dimensional mesh, to obtain a basemesh.

It should be noted that, after obtaining the input to-be-encoded three-dimensional mesh, the encoder side may first perform mesh decimation processing on the to-be-encoded three-dimensional mesh, to simplify the to-be-encoded three-dimensional mesh to a mesh with a relatively small quantity of points and surfaces, and keep a shape of the original mesh as much as possible. Further, mesh parameterization processing is performed on the decimated to-be-encoded three-dimensional mesh, to obtain the basemesh.

In this embodiment of this application, the first processing may be a processing process including mesh decimation and mesh parameterization, that is, the first processing is used for obtaining the basemesh.

Step 202: The encoder side performs submesh division on the basemesh, to obtain a P submesh.

In this embodiment of this application, after obtaining the basemesh through the first processing, the encoder side performs submesh division on the basemesh, and divides the basemesh into three types of submeshes: an I submesh, a P submesh, and a skip (Skip) submesh.

It should be noted that, the three types of submeshes respectively correspond to different encoding manners, that is, the three types of submeshes respectively need to be encoded in different encoding manners. Specifically, intra-frame encoding, inter-frame encoding, and skip encoding are separately performed on the I submesh, the P submesh, and the skip submesh.

Step 203: The encoder side determines a target encoding mode and a first target motion vector prediction (Motion Vector Prediction, MVP) value of a to-be-encoded mesh vertex in the P submesh.

The first target MVP value is one of N MVP values included in a first candidate list, each MVP value in the first candidate list corresponds to one index, and N is an integer greater than 1.

It should be noted that, when the P submesh is encoded, reference information and a motion vector need to be encoded in sequence, and when a motion vector (Motion Vector, MV) in the P submesh is encoded, an MV encoding scheme based on the first candidate list may be used.

In this embodiment of this application, the encoder side may pre-construct the first candidate list. The first candidate list includes N motion vector prediction (Motion Vector Prediction, MVP) values and an index corresponding to each MVP value. For example, the encoder side may determine the MVP value in the first candidate list based on an MV value of a neighboring encoded mesh vertex of the to-be-encoded mesh vertex. For example, one MVP value is correspondingly obtained based on an MV value of one encoded mesh vertex, M MVP values (M>N) may be correspondingly obtained based on MV values of N encoded mesh vertexes, and the first candidate list is obtained through construction based on these MVP values. Each MVP value in the first candidate list corresponds to one index. That is, the first candidate list includes the N MVP values and the index corresponding to each MVP value.

Optionally, the first candidate list may be further obtained in another manner. For example, the N MVP values in the first candidate list may be determined based on historical empirical values. Certainly, the MVP value in the first candidate list may be further obtained in another manner. This is not excessively listed herein.

Further, the encoder side may select one MVP value from the first candidate list as a first target MVP value of the to-be-encoded mesh vertex in the P submesh. For example, the encoder side may randomly select one MVP value, or select one MVP value closer to a preset value, or select one MVP value by separately calculating rate-distortion costs corresponding to these MVP values. When the first target MVP value is determined, an index corresponding to the first target MVP value can be obtained.

In addition, in this embodiment of this application, the target encoding mode may be a particular encoding mode, for example, a mode in which encoding is directly performed based on the MVP value or a mode in which encoding is performed based on the MVP value and a motion vector difference (Motion Vector Difference, MVD).

Optionally, the encoder side may determine the target encoding mode, or may determine the target encoding mode based on an agreement with the decoder side, or may select one of a plurality of candidate encoding modes as the target encoding mode, or the like. It should be noted that, the target encoding mode is an encoding mode for a motion vector in the P submesh.

Step 204: The encoder side encodes the target encoding mode and an index corresponding to the first target MVP value, to obtain a bitstream including first information, where the first information is used to indicate the target encoding mode and the index corresponding to the target MVP value.

In this embodiment of this application, after determining the target encoding mode of the to-be-encoded mesh vertex in the P submesh and the index corresponding to the first target MVP value, the encoder side encodes the target encoding mode and the index corresponding to the first target MVP value into a bitstream, to obtain the bitstream including first information. The first information is used to indicate the target encoding mode of the to-be-encoded mesh vertex in the P submesh and the index corresponding to the first target MVP value. Further, after receiving the bitstream of the encoder side, the decoder side can determine, based on the first information in the bitstream, the encoding mode used by the encoder side for the motion vector in the P submesh and the used MVP value. Further, the decoder side can decode a P submesh bitstream by using an encoding mode and an MVP value that correspond to the encoder side, to obtain a P submesh that is the same as that of the encoder side through decoding.

It should be noted that, the bitstream that includes the first information and that is obtained by the encoder side may be the P submesh bitstream, or may be a hybrid bitstream that includes a basemesh bitstream, a displacement bitstream, a texture map bitstream, and the like and that is finally obtained by the encoder side. This is not specifically limited in this embodiment of this application.

In this embodiment of this application, after performing submesh division on the basemesh, to obtain the P submesh, the encoder side determines the target encoding mode of the to-be-encoded mesh vertex in the P submesh and the index corresponding to the first target MVP value, and encodes the target encoding mode and the index corresponding to the first target MVP value into the bitstream, to encode a motion vector of the to-be-encoded mesh vertex in the P submesh. The first target MVP value is selected from the N MVP values included in the first candidate list. In this way, the encoder side is not limited to performing encoding in a fixed motion vector prediction manner, but can flexibly select the first target MVP value from the first candidate list to perform motion vector prediction, so that the encoder side encodes the motion vector of the P submesh in a more flexible manner, to help improve accuracy of inter-frame prediction for the P submesh by the encoder side, and also help improve encoding efficiency.

Optionally, before the encoder side determines the target encoding mode of the to-be-encoded mesh vertex in the P submesh and the first target MVP value, the method further includes:

constructing, by the encoder side, the first candidate list based on a neighboring encoded mesh vertex of the to-be-encoded mesh vertex in the P submesh.

Optionally, the encoder side may specify a length of the first candidate list in advance, that is, predetermine a quantity of MVP values included in the first candidate list, namely, a value of N. For example, assuming that N is equal to 10, the encoder side may determine ten MVP values based on ten neighboring encoded mesh vertexes of the to-be-encoded mesh vertex in the P submesh, to obtain the first candidate list through construction. Each MVP value in the first candidate list includes a corresponding index.

It should be noted that, the neighboring encoded mesh vertexes of the to-be-encoded mesh vertex may be N encoded mesh vertexes directly connected to the to-be-encoded mesh vertex, may be N encoded mesh vertexes closest to the to-be-encoded mesh vertex, or may be neighboring encoded mesh vertexes of the to-be-encoded mesh vertex in a direction. This is not specifically limited herein.

In this embodiment of this application, the encoder side constructs the first candidate list including the N MVP values, so that when encoding the motion vector in the P submesh, the encoder side can select one MVP value from the first candidate list as the first target MVP value, and encode the index corresponding to the first target MVP value. In this way, the encoder side encodes the motion vector in the P submesh in a more flexible manner.

Optionally, that the encoder side constructs the first candidate list based on the neighboring encoded mesh vertex of the to-be-encoded mesh vertex in the P submesh includes:

obtaining, by the encoder side, L neighboring encoded mesh vertexes and M neighboring encoded mesh vertexes of the to-be-encoded mesh vertex in the P submesh, where L and M are integers greater than 1;

obtaining, by the encoder side, a motion vector MV value of each of the L neighboring encoded mesh vertexes, and determining L first MVP values of a to-be-encoded mesh vertex based on the MV values of the L encoded mesh vertexes;

determining, by the encoder side, a second MVP value based on MV values respectively corresponding to the M encoded mesh vertexes; and

constructing, by the encoder side, the first candidate list based on the L first MVP values and the second MVP value, where $L+1 \leq N$.

It should be noted that, values of L and M may be the same or different. For example, L=10, and M=5, that is, the encoder side obtains five neighboring encoded mesh vertexes of the to-be-encoded mesh vertex in the P submesh and ten neighboring encoded mesh vertexes. The ten neighboring encoded mesh vertexes may include some or all of the five neighboring encoded mesh vertexes, or none of the five neighboring encoded mesh vertexes. Further, the encoder side obtains an MV value of each of the ten encoded mesh vertexes, uses the MV value as a first MVP value, that is, obtains ten first MVP values, and determines a second MVP value based on an MV value respectively corresponding to each of the five neighboring encoded mesh vertexes. For example, the second MVP value may be an average value of the MV values respectively corresponding to the five encoded mesh vertexes. The first candidate list is constructed based on the ten first MVP values and one second MVP value. For example, the first candidate list may include the ten first MVP values and one second MVP value, namely, a total of 11 MVP values, that is, N=11.

Optionally, if the first MVP value and the second MVP value have a same value, only one of the same MVP values may be reserved to be filled in the first candidate list. For example, the encoder side may obtain, in a specific order, MV values of the neighboring encoded mesh vertex of the to-be-encoded mesh vertex, and use the MV values of the neighboring encoded mesh vertex as the MVP values and fill the MVP values in the first candidate list one by one according to a quantity of MVP values that can be filled in the first candidate list. If a current to-be-filled MVP value is equal to a conventional MVP value in the first candidate list, padding of the current to-be-filled MVP value is skipped, and whether a next to-be-filled MVP value and the conventional MVP value are repeated continues to be detected. The first candidate list is filled in this manner.

In this embodiment of this application, the MVP value can be determined based on the MV values of the neighboring encoded mesh vertex of the to-be-encoded mesh vertex, to construct the first candidate list, thereby effectively improving flexibility of encoding the motion vector in the P submesh by the encoder side. It may be understood that, the MV value of the encoded mesh vertex can be learned of. The MV value of the encoded mesh vertex is used as the MVP value of the to-be-encoded mesh vertex, and subsequently, the encoder side may select one MVP value (namely, the first target MVP value) from the first candidate list as an MV prediction value of the to-be-encoded mesh vertex, to implement a plurality of inter-frame prediction manners for the P submesh, thereby helping improve inter-frame prediction accuracy and encoding efficiency.

Optionally, that the encoder side determines the second MVP value based on the MV values respectively corresponding to the M encoded mesh vertexes includes:

obtaining, by the encoder side, the MV values respectively corresponding to the M encoded mesh vertexes, and determining an average value of the M MV values as the second MVP value; or

obtaining, by the encoder side, the MV values respectively corresponding to the M encoded mesh vertexes, performing weighted average calculation on the M MV values, and determining a calculation result as the second MVP value.

For example, if M=5, that is, MV values respectively corresponding to five neighboring encoded mesh vertexes of the to-be-encoded mesh vertex are obtained, and an average value of the five MV values is used as the second MVP value in the first candidate list; or weighted average calculation may be performed on the five MV values, and a result of the weighted average calculation is used as the second MVP value. When weighted average calculation is performed, a weight corresponding to each MV value may be related to a distance between the encoded mesh vertex and the to-be-encoded mesh vertex. For example, a closer distance between the encoded mesh vertex and the to-be-encoded mesh vertex indicates a larger weight corresponding to the MV value of the encoded mesh vertex.

It should be noted that, the encoder side may randomly select a manner to determine the second MVP value, so that a manner of calculating the second MVP value by the encoder side is more flexible.

Optionally, a sorting order of the L first MVP values in the first candidate list is related to first distances, where the first distance is a distance between an encoded mesh vertex corresponding to the first MVP value and the to-be-encoded mesh vertex. For example, a closer distance between the encoded mesh vertex and the to-be-encoded mesh vertex indicates that the first MVP value corresponding to the encoded mesh vertex ranks higher in the first candidate list.

Optionally, the L first MVP values are sorted in ascending order of the first distances. That is, the L first MVP values are sorted in the first candidate list in ascending order of distances between the L encoded mesh vertexes corresponding to the L first MVP values and the to-be-encoded mesh vertex. For example, L=10, in the ten encoded mesh vertexes, a first MVP value corresponding to an encoded mesh vertex having a smallest distance with the to-be-encoded mesh vertex ranks top, and a first MVP value corresponding to an encoded mesh vertex having a largest distance with the to-be-encoded mesh vertex ranks bottom.

It may be understood that, based on such a manner, the encoder side is more likely to select an MVP value of an encoded mesh vertex that is closer to the encoder side as the first target MVP value, that is, can select the MVP value of the encoded mesh vertex that is closer to the encoder side to perform inter-frame prediction, to better ensure inter-frame prediction accuracy.

It should be noted that, in the first candidate list, the second MVP value may be sorted before all the first MVP values. That is, the second MVP value ranks top in the first candidate list, and then the L first MVP values are sorted in the foregoing sorting manner.

In this embodiment of this application, when L+1<N, that the encoder side constructs the first candidate list based on the L first MVP values and the second MVP value includes:

constructing, by the encoder side, a sub-candidate list based on the L first MVP values and the second MVP value; and

performing, by the encoder side, a zero-padding operation on the sub-candidate list, to obtain the first candidate list including the N MVP values.

For example, a quantity of MVP values that can be filled in the first candidate list is 15, that is, N=15. If L+1<15, that is, L first MVP values and one second MVP value cannot completely fill the first candidate list, the encoder side may perform the zero-padding operation on vacancy positions of the first candidate list. For example, MVP values filled in these vacancy positions are 0, until the first candidate list including 15 MVP values is obtained. In this way, the complete first candidate list can be obtained, to ensure that the encoder side can select one MVP value from the first candidate list as the first target MVP value, to implement inter-frame prediction on the P submesh.

It should be noted that, for the MVP values obtained by performing the zero-padding operation, the encoder side may rank these MVP values at the bottom of the first candidate list, that is, after the second MVP value and the L first MVP values.

In this embodiment of this application, after the encoder side constructs the first candidate list based on the neighboring encoded mesh vertex of the to-be-encoded mesh vertex in the P submesh, the method further includes:

resorting, by the encoder side, the N MVP values in the first candidate list, to obtain a resorted first candidate list; and in this case, that the first target MVP value is determined from the first candidate list includes:
determining, by the encoder side, the first target MVP value from the resorted first candidate list.

For example, after obtaining the first candidate list through construction based on the N MVP values, the encoder side may resort the N MVP values in the first candidate list, for example, may rank an MVP value having a great probability of being selected at the top of the first candidate list. When selecting the first target MVP value based on the resorted first candidate list, the encoder side is more likely to select the MVP value ranking top as the first target MVP value.

It should be noted that, the encoder side may perform adaptive resorting on the MVP values in the first candidate list. An index corresponding to an MVP value is usually encoded by using variable length coding. An objective of performing adaptive resorting is to rank the MVP value having the great probability of being selected at the top of the first candidate list. In this way, fewer bits may be used when index information corresponding to the first target MVP value is encoded, which further helps improve encoding efficiency of the encoder side.

Optionally, that the encoder side resorts the N MVP values in the first candidate list includes:

obtaining, by the encoder side, a sum of errors between a second target MVP value and a motion vector MV of the neighboring encoded mesh vertex of the to-be-encoded mesh vertex, where the second target MVP value is one of the N MVP values; and

resorting, by the encoder side, the N MVP values based on a sum of errors corresponding to each MVP value in the first candidate list.

For example, the encoder side may first sort the MVP values in the first candidate list in a default order, then traverse the first candidate list, and calculate a sum of errors between each MVP value in the first candidate list and the neighboring encoded mesh vertex of the to-be-encoded mesh vertex, so that a sum of errors corresponding to each MVP value can be obtained, and the MVP values in the first candidate list are resorted based on the sum of errors.

Optionally, the N MVP values in the resorted first candidate list are sorted in ascending order of the corresponding sum of errors. In other words, the N MVP values are resorted according to values of the sum of errors respectively corresponding to the N MVP values in the first candidate list and in ascending order of the sum of errors. That is, an MVP value having a smaller sum of errors is ranked higher in the first candidate list. In this way, the encoder side is more likely to select an MVP value having a small sum of errors as the first target MVP value, to help improve accuracy of performing inter-frame prediction by the encoder side.

In this embodiment of this application, that the encoder side determines the first target MVP value may specifically include:

obtaining, by the encoder side in the first candidate list, a first rate-distortion cost of each MVP value in a first encoding mode and a second rate-distortion cost of each MVP value in a second encoding mode, to obtain N first rate-distortion costs and N second rate-distortion costs; and

determining, by the encoder side, the first target MVP value in the N MVP values according to the N first rate-distortion costs and the N second rate-distortion costs.

Optionally, the first encoding mode is a mode in which encoding is directly performed based on the MVP value, and the second encoding mode is a mode in which encoding is performed based on the MVP value and an MVD value.

When selecting the first target MVP value from the first candidate list, the encoder side may separately calculate the rate-distortion cost of each MVP value in the first candidate list in the first encoding mode and the rate-distortion cost of each MVP value in the second encoding mode, that is, each MVP value separately corresponds to two rate-distortion costs, then compares all rate-distortion costs of all the MVP values in the first candidate list, and selects one MVP value from the rate-distortion costs as the first target MVP value. For example, an MVP value having a smallest rate-distortion cost may be selected as the first target MVP value, or an MVP value having a smallest rate-distortion cost that is calculated in an encoding mode may be used as the first target MVP value. This is not specifically limited in this embodiment of this application.

Optionally, a first rate-distortion cost or a second rate-distortion cost that corresponds to the first target MVP value is a smallest one of the N first rate-distortion costs and the N second rate-distortion costs. In other words, if a first rate-distortion cost of an MVP value that is calculated in the first encoding mode is the smallest among all the rate-distortion costs, the MVP value is used as the first target MVP value; or if a second rate-distortion cost of an MVP value that is calculated in the second encoding mode is the smallest among all the rate-distortion costs, the MVP value is used as the first target MVP value. In this way, it can be ensured that the rate-distortion cost of the first target MVP value is the smallest, to more effectively ensure accuracy of inter-frame prediction for the P submesh.

Optionally, when the first rate-distortion cost corresponding to the first target MVP value is the smallest one of the N first rate-distortion costs and the N second rate-distortion costs, the target encoding mode is the first encoding mode; or when the second rate-distortion cost corresponding to the first target MVP value is the smallest one of the N first rate-distortion costs and the N second rate-distortion costs, the target encoding mode is the second encoding mode.

Further, when the target encoding mode is the second encoding mode, the method further includes:
encoding, by the encoder side, an MVD value of the to-be-encoded mesh vertex in the P submesh.

In this embodiment of this application, the second encoding mode is a mode of performing encoding based on the MVP value and the MVD value. In the encoding mode, after encoding an index corresponding to the first target MVP value and the target encoding mode, the encoder side further needs to encode the MVD value of the to-be-encoded mesh vertex in the P submesh.

It should be noted that, if the target encoding mode is the first encoding mode, namely, a mode in which encoding is directly performed based on the MVP value, the encoder side does not need to encode the MVD value of the to-be-encoded mesh vertex.

Optionally, when a rate-distortion cost is calculated, rate-distortion cost calculation may be performed on the MVP values in the resorted first candidate list.

It should be noted that, a calculation manner of rate-distortion costs corresponding to the MVP values is as follows:

$$J = D + \lambda R$$

J is a rate-distortion cost, D is distortion introduced by encoding, $\lambda$ is a Lagrange coefficient, and R is a quantity of bits used on encoding MV information in a corresponding encoding mode. When the encoding mode is the second encoding mode, that is, when encoding needs to be performed on the MVD, D in the corresponding rate-distortion cost is 0. When the encoding mode is that encoding is not performed on the MVD, that is, when the encoding mode is the first encoding mode, D is not 0.

Optionally, a target rate-distortion cost is related to a first length difference and a first angle, the first length difference is a difference between a modulus of a third target MVP value and a modulus of an MV value of the to-be-encoded mesh vertex, and the first angle is an angle between the third target MVP value and the MV value of the to-be-encoded mesh vertex; and the target rate-distortion cost is the first rate-distortion cost or the second rate-distortion cost, and the third target MVP value is one of the N MVP values in the first candidate list.

For example, a possible calculation manner of the distortion D is as follows:

$$D = \alpha \| MV - MVP \|_2 + \beta \frac{1}{(1.01 + \cos(MV, MVP))}$$

An MV is an MV value of the to-be-encoded mesh vertex, MVP is an MVP value in the first candidate list, (MV-MVP) is a length difference between the MV and the MVP, (MV, MVP) is a magnitude of an angle between the MV and the MVP, and $\alpha$ and $\beta$ are weight coefficients. The length difference between the MV and the MVP is a difference between a modulus of an MV value and a modulus of an MVP value of the to-be-encoded mesh vertex. The magnitude of the angle between the MV and the MVP is a magnitude of the angle between the MV value and the MVP value of the to-be-encoded mesh vertex. Further, a rate-distortion cost corresponding to the MVP value of the encoded mesh vertex is related to a modulus difference and a magnitude of an angle between the MVP value of the encoded mesh vertex and the MV value of the to-be-encoded mesh vertex. This helps the encoder side select the first target MVP value from the first candidate list according to the rate-distortion cost, to ensure the accuracy of the inter-frame prediction for the P submesh.

In this embodiment of this application, the encoder side is not limited to performing encoding in a fixed motion vector prediction manner, but can flexibly select the first target MVP value from the first candidate list to perform motion vector prediction, so that the encoder side encodes the motion vector of the P submesh in a more flexible manner, to help improve the accuracy of the inter-frame prediction for the P submesh by the encoder side.

FIG. 3 is a flowchart of another three-dimensional mesh inter-frame prediction decoding method according to an embodiment of this application. The method is applied to a decoder side. As shown in FIG. 3, the method includes the following steps.

Step 301: A decoder side obtains a bitstream sent by an encoder side, where the bitstream includes a basemesh bitstream.

Optionally, the bitstream may be the basemesh bitstream, or may be a hybrid bitstream including a basemesh bitstream, a displacement video bitstream, a texture map bitstream, and the like.

Step 302: The decoder side decodes a basemesh type of the basemesh bitstream, to obtain a P submesh bitstream including first information, where the first information is used to indicate a target encoding manner and an index corresponding to a first target MVP value.

It may be understood that, on the encoder side, the basemesh is divided into an I submesh, a P submesh, and a skip submesh. Different types of submeshes are respectively encoded in different encoding modes, to obtain bitstreams of the different types of submeshes.

In this embodiment of this application, after obtaining the basemesh bitstream, the decoder side decodes a basemesh type of the basemesh bitstream, to obtain an I submesh bitstream, a P submesh bitstream, and a skip submesh bitstream. The P submesh bitstream includes the first information used to represent the target encoding manner and the index corresponding to the first target MVP value, and may be, for example, the bitstream including the first information. The decoder side may decode the bitstream including the first information to obtain the first information, or the encoder side may directly encode the first information into the P submesh bitstream.

Step 303: The decoder side determines a target encoding mode according to the first information, and determines the first target MVP value from a first candidate list according to the index corresponding to the first target MVP value.

The first candidate list includes N MVP values and an index corresponding to each MVP value, the first target MVP value is one of the N MVP values, and N is an integer greater than 1.

It should be noted that, the decoder side may pre-construct the first candidate list in a same manner as that of the encoder side, or may obtain the first candidate list from the encoder side. For a construction manner of the first candidate list, refer to the descriptions in the foregoing embodiment of the encoder side, and details are not described herein again.

It may be understood that, the decoder side can determine, according to the first information, the target encoding mode used by the encoder side for the motion vector in the P submesh, and can find the corresponding first target MVP value from the first candidate list according to the index corresponding to the first target MVP value.

Step 304: The decoder side decodes the P submesh bitstream according to the target encoding mode and the first target MVP value, to obtain an MV value of a to-be-decoded mesh vertex in a P submesh.

It should be noted that, decoding of the basemesh bitstream may be divided into intra-frame mode decoding for the I submesh bitstream, inter-frame mode decoding for the P submesh bitstream, and skip mode decoding for the skip submesh bitstream. A basemesh decoding module sends, according to a type identifier of a submesh in a bitstream, different bitstream segments to decoders in corresponding modes for decoding. After decoding of the submeshes is completed, the submeshes are merged and spliced, to generate a basemesh reconstructed by decoding. A bitstream segment corresponding to the I submesh is sent to an intra-frame mode decoder for decoding, to obtain the I submesh. A bitstream segment corresponding to the P submesh is sent to an inter-frame mode decoder for decoding, to obtain the P submesh. A bitstream segment corresponding to the skip submesh is sent to a skip mode decoder for decoding, to obtain the skip submesh.

In this embodiment of this application, after obtaining the P submesh bitstream and the first information, the decoder side determines an MV value of a to-be-decoded mesh vertex in the P submesh according to the target encoding mode and the first target MVP value. For example, if the target encoding mode is a mode in which encoding is directly performed based on the MVP value, the first target MVP value may be directly determined as the MV value of the to-be-decoded mesh vertex in the P submesh. If the target encoding mode is a mode in which encoding is performed based on the MVP value and an MVD value, the decoder side further needs to decode the MVD, and adds the MVD obtained through decoding and the first target MVP value as the MV value of the to-be-decoded mesh vertex in the P submesh.

In the solution provided in this embodiment of this application, the decoder side determines the index corresponding to the first target MVP value according to the first information, selects the corresponding first target MVP value from the first candidate list, and decodes the P submesh bitstream with reference to the first target MVP value and the target encoding mode determined from the bitstream, to obtain the MV value of the to-be-decoded mesh vertex in the P submesh.

Optionally, before the first target MVP value is determined from the first candidate list according to the index corresponding to the target MVP value, the method further includes:

constructing, by the decoder side, the first candidate list based on a neighboring decoded mesh vertex of the to-be-decoded mesh vertex in the P submesh.

Optionally, that the decoder side constructs the first candidate list based on a neighboring decoded mesh vertex of the to-be-decoded mesh vertex in the P submesh includes:

obtaining, by the decoder side, L neighboring decoded mesh vertexes and M neighboring decoded mesh vertexes of the to-be-decoded mesh vertex in the P submesh, where L and M are integers greater than 1;

obtaining, by the decoder side, an MV value of each of the L neighboring decoded mesh vertexes, and determining L first MVP values of the to-be-decoded mesh vertex based on the MV values of the L neighboring decoded mesh vertexes;

determining, by the decoder side, a second MVP value based on MV values respectively corresponding to the M decoded mesh vertexes; and

constructing, by the decoder side, the first candidate list based on the L first MVP values and the second MVP value, where $L+1 \leq N$.

Optionally, that the decoder side determines the second MVP value based on the MV values respectively corresponding to the M decoded mesh vertexes includes:

obtaining, by the decoder side, the MV values respectively corresponding to the M decoded mesh vertexes, and determining an average value of the M MV values as the second MVP value; or

obtaining, by the decoder side, the MV values respectively corresponding to the M decoded mesh vertexes, performing weighted average calculation on the M MV values, and determining a calculation result as the second MVP value.

Optionally, a sorting order of the L first MVP values in the first candidate list is related to first distances, where the first distance is a distance between a decoded mesh vertex corresponding to the first MVP value and the to-be-decoded mesh vertex.

Optionally, the L first MVP values are sorted in ascending order of the first distances.

Optionally, when L+1<N, that the decoder side constructs the first candidate list based on the L first MVP values and the second MVP value includes:

constructing, by the decoder side, a sub-candidate list based on the L first MVP values and the second MVP value; and
performing, by the decoder side, a zero-padding operation on the sub-candidate list, to obtain the first candidate list including the N MVP values.

It should be noted that, if the first MVP value and the second MVP value have a same value, only one of the same MVP values may be reserved to be filled in the first candidate list. That is, when the first candidate list is constructed, a deduplication operation can be performed on the MVP value in the first candidate list.

Optionally, after the decoder side constructs the first candidate list based on the neighboring decoded mesh vertex of the to-be-decoded mesh vertex in the P submesh, the method further includes:

resorting, by the decoder side, the N MVP values in the first candidate list, to obtain a resorted first candidate list; and
that the first target MVP value is determined from the first candidate list according to the index corresponding to the first target MVP value includes:
determining, by the decoder side according to the index corresponding to the first target MVP value, the first target MVP value from the resorted first candidate list.

Optionally, that the decoder side resorts the N MVP values in the first candidate list includes:

obtaining, by the decoder side, a sum of errors between a second target MVP value and an MV value of the neighboring decoded mesh vertex of the to-be-decoded mesh vertex, where the second target MVP value is one of the N MVP values; and
resorting, by the decoder side, the N MVP values based on a sum of errors corresponding to each MVP value in the first candidate list.

Optionally, the N MVP values in the resorted first candidate list are sorted in ascending order of the corresponding sum of errors.

It should be noted that, the decoder side may perform procedures such as constructing and resorting the first candidate list in a manner the same as that of the encoder side. For a specific implementation, refer to the descriptions in the foregoing encoder side method embodiment, and details are not described herein again.

Optionally, the target encoding mode is a first encoding mode or a second encoding mode, the first encoding mode is a mode in which encoding is directly performed based on the MVP value, and the second encoding mode is a mode in which encoding is performed based on the MVP value and an MVD value.

Optionally, when the target encoding mode is the second encoding mode, the P submesh bitstream further includes the MVD value, and the method further includes:

performing, by the decoder side, MVD decoding on the P submesh bitstream, to obtain an MVD value corresponding to the to-be-decoded mesh vertex in the P submesh; and
that the MV value of the to-be-decoded mesh vertex in the P submesh is obtained includes:
determining, according to the MVD value corresponding to the to-be-decoded mesh vertex in the P submesh and the first target MVP value, the MV value corresponding to the to-be-decoded mesh vertex in the P submesh.

In this embodiment of this application, when the target encoding mode is a mode of performing encoding based on the MVP value and the MVD value, that is, the encoder side further encodes the MVD value of the to-be-encoded mesh vertex in the P submesh, the decoder side also needs to perform MVD decoding, to obtain the MVD value corresponding to the to-be-decoded mesh vertex, and then determine, based on the MVD value corresponding to the to-be-decoded mesh vertex and the first target MVP value, the MV value corresponding to the to-be-decoded mesh vertex. For example, the MV value is a sum of the MVD value and the first target MVP value. In this way, it can be ensured that the decoder side can perform decoding to obtain the motion vector in the P submesh that is consistent with that of the encoder side.

For better understanding, the method involved in this embodiment of this application is explained and described below by using an encoding method on an encoder side and a decoding method on a decoder side respectively.

The three-dimensional mesh encoding method of the encoder side specifically includes the following procedure (refer to the flowchart shown in FIG. 1a):

(1) mesh decimation

The mesh decimation is simplifying a currently input mesh to a basemesh having a relatively small quantity of points and surfaces, and keeping a shape of an original mesh as much as possible. A focus of the mesh decimation lies in a decimated operation and a corresponding error metric. A feasible mesh decimation operation is shown in FIG. 4a. Vertexes on two ends of a side are merged into one vertex and a connection between the two vertexes is deleted. This process is repeated in an entire mesh according to a rule, to reduce a quantity of surfaces and a quantity of vertexes of the mesh to target values.

In a decimation process, an error metric may be selected to optimize a decimation result. For example, a sum of equation coefficients of all adjacent surfaces of a vertex may be selected as an error metric of the vertex, and an error metric of a corresponding side is a sum of error metrics of two vertexes on the side. In other words, an error generated by merging one side is a sum of distances between the merged vertex and all neighboring planes of the two original vertexes of the side.

After the decimation operation and the corresponding error metric are determined, mesh decimation is iteratively performed. First, a vertex error of an initial mesh is calculated, to obtain an error of each side. Then, the sides are sorted in ascending order of errors, and a side with a smallest error is selected for merging each time. In addition, a position of a merged vertex is calculated, and errors of all sides related to the merged vertex are updated. That is, a side sorting order is updated, to ensure that each time of iteration is based on a global error metric. Through iteration, a quantity of surfaces of the mesh is decimated to satisfy a quantity needed for lossy encoding.

(2) mesh parameterization

In this step, texture coordinates need to be regenerated for the decimated mesh. Currently, many algorithms, such as the Iso-charts algorithm, have been used for parameterizing a mesh. In the algorithm, spectral analysis is used to implement three-dimensional mesh parameterization driven by stretching, UV expansion and partition are performed on the three-dimensional mesh, and the three-dimensional mesh is packed into a two-dimensional texture domain.

(3) Basemesh compression

When the basemesh is encoded, the basemesh is divided into three types of submeshes: an I submesh, a P submesh, and a skip submesh. Intra-frame encoding, inter-frame encoding, and skip encoding are respectively performed on the three types of submeshes. The encoder side may determine an encoding mode of each submesh in a manner of comparing rate-distortion costs. When the I submesh is encoded, encoding is performed by using a conventional static mesh encoder on geometrical information, connection information, and attribute information of the I submesh. When the P submesh is encoded, reference information and a motion vector need to be encoded in order. When the skip submesh is encoded, only reference information of the skip submesh needs to be encoded.

When an MV in the P submesh is encoded, there are two feasible schemes that can be used: a conventional MV encoding scheme and an MV encoding scheme based on an MVP candidate list (namely, the foregoing first candidate list).

① Existing MV encoding scheme of V-DMC

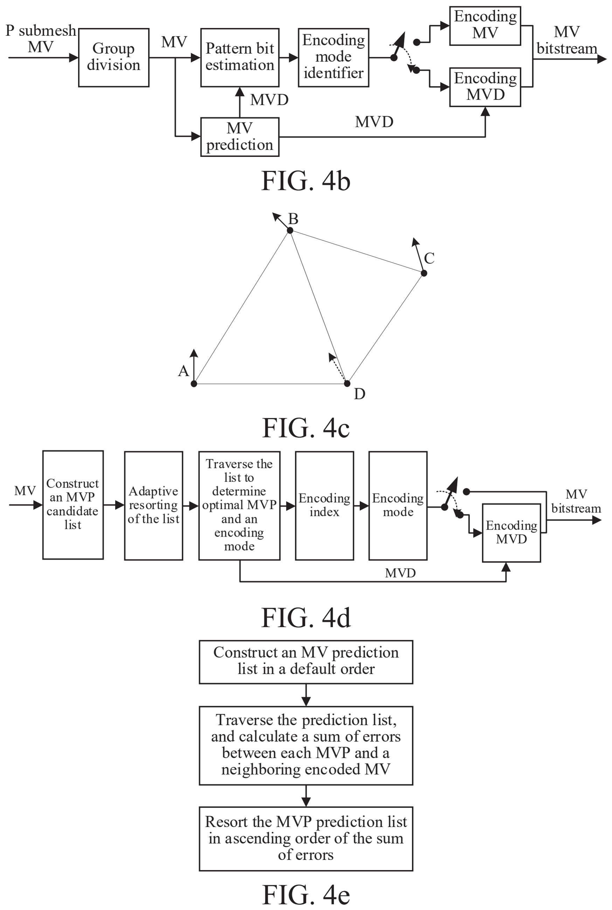

The conventional MV encoding scheme is shown in FIG. 4b. When MVs are encoded, vertexes are grouped in ascending order of vertex indexes. 16 vertexes are grouped into one group (Group), and the MVs are encoded group by group in a traversing order. An encoding mode of MVs in each group is divided into two types. In one mode, the MVs are directly encoded. In the other mode, prediction is first performed on the MVs, and then MVDs are encoded. The encoder side separately estimates a quantity of bits that are used in the two encoding modes for each group of MVs, and selects an MV encoding mode in which a small quantity of bits are used from the two encoding modes. Therefore, an encoding mode for each group needs to be identified by using one flag bit. During specific encoding, a mode identifier is first encoded, and then the MV or the MVD is encoded.

An MV prediction technology used in a conventional scheme is a relatively simple average value prediction technology. That is, an average value of neighboring encoded MVs (where a maximum of three neighboring encoded MVs are used) of a current vertex is used as a motion vector prediction value of the current MV. As shown in FIG. 4c, assuming that a point D is a current point, and a point A, a point B, and a point C are neighboring points at which MVs have been encoded, a calculation formula of an MV prediction value of the point D is as follows:

$$MVP_D = ave(MV_A, MV_b, MV_c)$$

$MVP_D$ is the MV prediction value of the point D, $MV_A$ is an MV value of the point A, $MV_b$ is an MV value of the point B, and $MV_c$ is an MV value of the point C.

A calculation formula of an MV prediction difference value MVD of the point D is as follows:

$$MVD_D = MV_D - MVP_D$$

$MVD_D$ is the MV prediction difference value of the point D, $MV_D$ is an MV value of the point D, and $MVP_D$ is an MV prediction value of the point D.

② An MV encoding scheme based on an MVP candidate list

As shown in FIG. 4d, for motion vector encoding of the P submesh, in this application, an MV encoding scheme based on an MV prediction candidate list is designed. When encoding each MV, the encoder side first constructs the MV prediction candidate list according to a fixed rule, then adaptively resorts the list, and then traverses the list to determine an encoding mode and optimal MVP according to a rate-distortion criterion. Finally, the encoder side sequentially encodes an MVP index and a mode identifier. Whether to encode the MVD depends on the encoding mode. The following describes in detail the three parts: construction of an MVP candidate list, adaptive resorting, the encoding mode, and determining of the optimal MVP.

(a) Construction of an MVP candidate list

Table 1 Default MVP candidate list

| Index | MVP value |
|---|---|
| 0 | MVP of N points |
| 1 | MVP 1 of a single point |
| 2 | MVP 2 of a single point |
| ... | ... |
| Maximum value (MaxCand) | ... |

A default construction manner of the MVP candidate list is shown in Table 1. A maximum length of a specified list is MaxCand, and then the MVP of the N points (N>1) and the MVP of the single point are sequentially filled. There are two possible manners of calculating the MVP of the N points. One manner is to calculate an average value of N neighboring encoded MVs as the MVP value of the N points. The other manner is to perform a weighted average operation on neighboring MVs according to a distance between vertexes corresponding to neighboring encoded MVs and the current vertex, and use a weighted average result as the MVP value of the N points. For the MVP of the single point, neighboring encoded MVs are directly used as the MVP and are stored into the list. When a quantity of neighboring encoded MVs is greater than 1, the MVP of the single point is stored in ascending order of lengths of distances to the current vertex. It should be noted that, when the MV prediction candidate list is filled, repeated MVP detection is performed. That is, if a current to-be-filled MVP value is equal to a conventional MVP value in the list, padding of the current MVP value is skipped. If a maximum value MaxCand in the list is not reached after the MVP of the N points and the MVP of the single point are filled completely, zero vector padding is performed on the list.

(b) Adaptive resorting of the MVP candidate list

The MVP index is usually encoded by using variable length coding. An objective of performing adaptive resorting is to rank MVP having a great probability of being selected at a position of a table header of the list. In this way, fewer bits may be used when index information is encoded. Therefore, it is very necessary to resort the candidate list by using an adaptive resorting algorithm. A possible MVP candidate list resorting algorithm is shown in FIG. 4e.

Specifically, an MVP candidate list of the current vertex is first constructed in a default order. Then, the MVP candidate list is traversed, a sum of errors between each MVP and neighboring encoded MVs is calculated, and finally, the MVP list is resorted in ascending order of the sum of errors.

(c) Traverse the list to determine the encoding mode and the optimal MVP

To determine the encoding mode and the optimal MVP, the resorted MVP candidate list needs to be traversed, and a rate-distortion cost J = D + λR of performing encoding in different modes by using each MVP is calculated. D represents distortion introduced by encoding, λ is a Lagrange coefficient, and R is a quantity of bits used on encoding MV information in a corresponding encoding mode. When the encoding mode is encoding the MVD, a component D in a corresponding rate-distortion cost is 0; and when the encoding mode is not encoding the MVD, D is not 0.

A possible calculation manner of the distortion D is as follows:

$$D = \alpha \|MV - MVP\|_2 + \beta \frac{1}{(1.01 + cos(MV, MVP))}$$

*(MV-MVP)* is used to calculate a length difference between the MV and the MVP, *(MV, MVP)* is used to measure a magnitude of an angle between the MV and the MVP, and $\alpha$ and $\beta$ are weight coefficients.

After processing in the foregoing three steps is performed, the encoder side has determined encoded content of the MV information. The encoder side encodes the optimal MVP index and the mode identifier in order, and then decides, according to the mode identifier, whether to encode the MVD.

(4) Subdivision and deformation

A subdivision and deformation module is applied to an input 3D mesh to generate displacement vector information. For example, an input 2D curve (represented by a 2D folded line) is referred to as an "original" curve. First, down-sampling is performed to generate a basic curve/folded line, which is referred to as a "decimated" curve. Then, a subdivision scheme is applied to a plurality of segmented lines obtained through decimation, to generate a "subdivided" curve. Subsequently, the subdivided plurality of segmented lines are deformed, to obtain a better original curve approximation. That is, a geometrical displacement vector is calculated for each vertex of a subdivided mesh, so that a shape of the subdivided curve is close to a shape of the original curve as much as possible. These geometrical displacement vectors are the geometrical displacement vector information output by the module. A same deformation process is also applied to attribute information corresponding to a vertex, to obtain a corresponding attribute displacement vector.

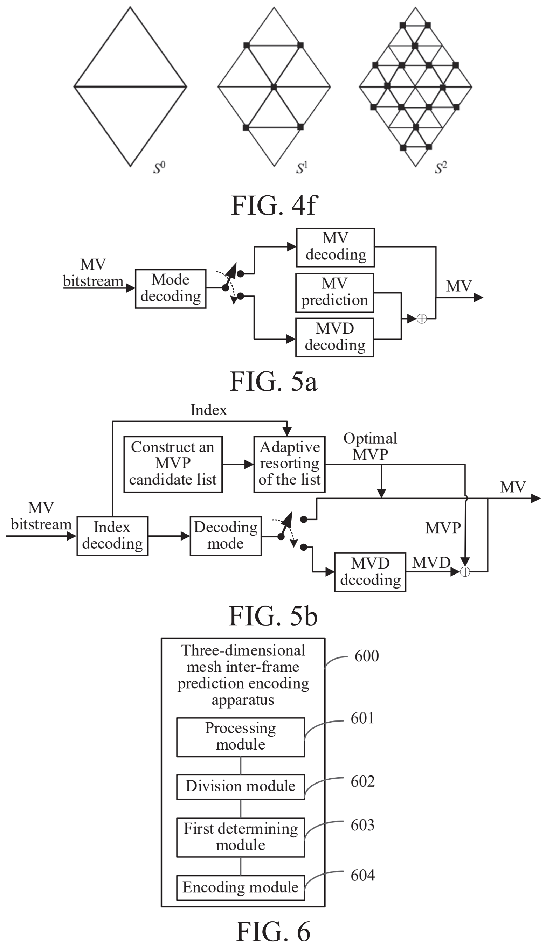

A subdivision and deformation module uses a parameterized submesh as an input. In this step, the input mesh is first subdivided. A subdivision scheme may be randomly selected. A possible scheme is a mid-point subdivision scheme. In the scheme, each triangle is subdivided into four sub-triangles in each time of subdivision iteration, as shown in FIG. 4f. A new vertex is introduced in the middle of each side, and subdivision of geometrical information and subdivision of the attribute information are independently performed because a connection relationship of the geometrical information and a connection relationship of the attribute information are usually different.

In this scheme, a manner of calculating a position $Pos(v_{12})$ of a mid-point $v_{12}$ of a newly introduced side $(v_1, v_2)$ is shown in Formula (1):

$$Pos(v_{12}) = \frac{1}{2} \left( Pos(v_1) + Pos(v_2) \right) \#(1)$$

$Pos(v_1)$ and $Pos(v_2)$ are respectively geometrical coordinates of a vertex $v_1$ and a vertex $v_2$.

For the subdivided mesh, a nearest point (including a point on an original mesh surface) of each point thereof on the original input mesh is searched for, and searching may be accelerated by using a data structure such as kdTree. A displacement vector of geometrical coordinates of each vertex on the subdivided mesh is obtained by calculating a distance between each vertex on the subdivided mesh and the geometrical coordinates of the nearest neighboring point of each point on the original input mesh. The module transfers the generated displacement vector to a subsequent module for encoding.

In addition, the generated displacement vector is in a global coordinate system the same as that of the input mesh. A possible optimization method is to place the generated displacement vector into a local coordinate system. A local coordinate system of each vertex is defined by a normal vector of the vertex on the subdivided mesh. An advantage of this manner lies is that a normal component of the geometrical displacement vector has more significant impact on mass of the reconstructed mesh than two tangent components do. Therefore, a larger quantization parameter may be set for the tangent component.

(5) Wavelet transform

Transform may be applied to a displacement vector to reduce correlation between data of the displacement vector. Optional transform is linear wavelet transform, and a prediction process thereof is defined as Formula (2):

$$Signal(v) \leftarrow Signal(v) - \frac{1}{2}\big(Signal(v_1) + Signal(v_2)\big) \#(2)$$

v is a newly inserted mid-point on a side ($v_1$, $v_2$), $Signal(v)$, $Signal(v_1)$ and $Signal(v_2)$ are respectively a corresponding displacement vector of a vertex v, a vertex $v_1$, and a vertex $v_2$. The displacement vector of the vertex v is predicted and then updated. An update process is defined as Formula (3):

$$Signal(v) \leftarrow Signal(v) + \frac{1}{8}\sum_{w \in v^*} Signal(w) \#(3)$$

v* is a set of all neighboring vertexes of the vertex v. The transformed displacement vector is referred to as a wavelet coefficient.

(6) Coefficient quantization

Quantization may be performed on the transformed displacement vector, namely, the wavelet coefficient. There are a plurality of quantization manners. One method is shown in Formula (4) and Formula (5):

$$disp[v].d[k] = floor(disp[v].d[k] * scale[k]) \#(4)$$

$$scale[k] = 2\string^(16 - bitDepthPosition + \frac{(4 - qp[k])}{6}) \#(5)$$

*disp[v]* represents a value of a transformed displacement vector of a $v^{th}$ vertex, d[k] represents a $k^{th}$ value of the displacement vector, and *floor* represents rounding down. *bitDepthPosition* represents a bit depth of a geometrical position of a vertex in the current mesh, and *qp[k]* represents a quantization parameter of a $k^{th}$ coefficient. As described above, after a coordinate system of the displacement vector is converted, a normal component of the displacement vector has more significant impact on mass than a tangent component of the displacement vector does. Therefore, a larger quantization parameter may be used for the tangent component.

In addition, according to a feature of the wavelet transform, different quantization parameters may be further used for a vertex newly generated through subdivision and an original vertex. That is, for the vertex obtained through subdivision, quantization parameter update is shown as Formula (6):

$$scale[k] = scale[k] * lodScale[k] \#(6)$$

*lodScale[k]* represents a coefficient of a quantization parameter at a current subdivision level.

(7) Displacement encoding

In the displacement encoding part, video encoding is performed by using the quantized wavelet coefficients as input, and the quantized wavelet coefficients need to be packed into a two-dimensional image. A packing manner is as follows:

   traversing the wavelet coefficients in an order from a low frequency to a high frequency;
   determining, for each coefficient, an index (for example, N=M=16) of a pixel block *NxM* of the coefficient, and the index should be stored in the pixel block in a raster scanning order of blocks; and
   calculating, in a Morton (Morton) order, a position of a corresponding pixel block *NxM* on an image.

A packing manner is not limited herein, and another packing scheme such as a zigzag order and a raster order may also be used. An encoder may explicitly indicate a corresponding packing scheme in a bitstream.

After the wavelet coefficients are packed on the two-dimensional image, the two-dimensional image may be directly encoded by using a video encoder. According to the provided scheme, any existing video encoder may be used, and type information of the video encoder needs to be encoded in auxiliary information.

(8) Reconstruction of a deformed mesh

The displacement encoding module obtains reconstructed displacement, that is, obtains a displacement vector consistent with that of the decoder side in a manner of inverse quantization and inverse transform. After the reconstructed geometrical displacement vector is obtained, a reconstructed basemesh is subdivided, a reconstructed subdivided and deformed mesh is obtained according to the corresponding displacement vector, and the reconstructed subdivided and deformed mesh is transferred to a texture map transfer module.

(9) Texture map transfer

The texture map transfer module performs texture map transfer according to the input original mesh, the input original texture map, and the reconstructed deformed mesh.

Steps of the texture map transfer are as follows:

calculating texture coordinates of each pixel on a to-be-generated texture map, for example, texture coordinates corresponding to a pixel A (i, j) are P (u, v);
determining whether the texture coordinates are in a triangular plane obtained after the subdivided and deformed mesh is parameterized;
if the texture coordinates do not belong to any triangular plane, the pixel is marked as an empty pixel, and then padding may be performed by using a padding algorithm;
if the texture coordinates belong to a triangular plane,
marking the pixel as filled;
calculating barycentric coordinates of the texture coordinates in the current triangular plane according to the texture coordinates;
mapping, according to the barycentric coordinates of and the corresponding triangular plane, two-dimensional texture coordinates to three-dimensional geometrical coordinates, that is, to points on a subdivided and deformed mesh corresponding to the texture coordinates;
searching the input original mesh for a point closest to the three-dimensional coordinates;
calculating barycentric coordinates of the three-dimensional coordinates according to a triangular plane on which the three-dimensional coordinates are located, mapping the three-dimensional coordinates to two-dimensional coordinates, and calculating texture coordinates of the three-dimensional coordinates;
sampling the input original texture map through the texture coordinates, to obtain a value A'(i', j') of a corresponding pixel position; and
assigning the value to the corresponding pixel A (i, j) on a to-be-generated texture map.

(10) Texture map compression

After the converted texture map is obtained, for empty pixels on the converted texture map, the empty pixels may be filled by using a conventional padding algorithm (such as a Push-Pull (Push-Pull) algorithm). Then, the empty pixels may be encoded by using the conventional video encoder such as H.264/AVC, H.265/HEVC, or H.266/VVC, to obtain a bitstream of an output texture map. In addition, operations such as color space conversion and chroma subsampling may also be selectively applied, so that video encoding can have better rate-distortion performance, for example, color space conversion from RGB 444 to YUV420.

(11) Auxiliary information

In an encoding process, there are some alternative schemes in the modules, such as a type of a mesh encoder, a type of a video encoder, a mesh subdivision scheme, a displacement vector transform scheme, and a displacement encoding manner. The proposed framework allows use of different schemes. Therefore, the selected scheme needs to be transferred to the decoder side to guide correct decoding.

After encoding of all modules is completed, a basemesh part bitstream, a texture coordinate part bitstream, a displacement vector video bitstream, an attribute map video bitstream, and an auxiliary information bitstream are mixed to obtain an encoding bitstream finally output by the encoder side.

The three-dimensional mesh decoding method of the decoder side specifically includes the following procedure (refer to the flowchart shown in FIG. 1b):

(1) Auxiliary information decoding

The decoder side first determines a decoding scheme according to the auxiliary information. The decoding scheme mainly includes a displacement encoding manner, which indicates whether displacement is encoded through the video encoder or encoded through an entropy encoder. According to a static mesh encoder type, the decoder side is guided to use a corresponding static mesh decoder. According to a video encoder type, the decoder side is guided to use a corresponding video decoder. A subdivision scheme is a scheme of reconstructing subdivision of a basemesh in a deformed mesh, and a subdivision scheme of the encoder side and a subdivision scheme of the decoder side should be kept consistent. Further, there are an optional space domain displacement transform scheme, a coefficient packing scheme, and the like.

(2) Basemesh decoding

Basemesh decoding may be classified into intra-frame mode decoding, inter-frame mode decoding, and skip mode decoding. A basemesh decoding module sends, according to a type identifier of a submesh in a bitstream, different bitstream segments to decoders in corresponding modes for decoding. After decoding of the submeshes is completed, the submeshes are merged and spliced, to generate a basemesh reconstructed by decoding. A bitstream segment corresponding to the I submesh is sent to an intra-frame mode decoder for decoding. A bitstream segment corresponding to the P submesh is sent to an inter-frame mode decoder for decoding. A bitstream segment corresponding to the skip submesh is sent to a skip mode decoder for decoding.

In the foregoing process, a decoding process of the P submesh is approximately as follows:

decoding reference information, to obtain reference submesh information corresponding to a reference frame from a decoding buffer; and
decoding a motion vector of each vertex in the submesh, and correcting a position of a vertex in a reference submesh by using the motion vector.

For a second step of the foregoing P submesh decoding procedure, currently, there are two feasible MV decoding schemes: a conventional MV decoding scheme and an MV decoding scheme based on an MVP candidate list. Two MV decoding schemes are described in detail.

① Existing MV decoding scheme

A conventional MV decoding procedure for the P submesh is shown in FIG. 5a. First, an encoding mode of each group is decoded, and after decoding, encoding modes of MVs of all vertexes in the group may be obtained. If a mode identifier obtained through decoding indicates that the encoder side directly encodes the MV, a bitstream is directly decoded and is then output, so that the MV of each vertex in the group can be obtained. If an identifier obtained through decoding indicates that the encoder side encodes the MVD, the MV of the current vertex needs to be predicted by using a decoded MV of a neighboring vertex, to generate the MVP, and then the decoded MVD and the decoded MVP are added and then are output as an MV obtained through decoding.

② An MV decoding scheme based on an MVP candidate list

The MV decoding scheme based on the MVP candidate list is designed in this application. As shown in FIG. 5b, an MV decoding procedure is as follows:

constructing the MVP candidate list by using a neighboring decoded and reconstructed MV, and performing adaptive resorting on the MVP candidate list;
decoding an optimal MVP index, and searching the MVP candidate list for corresponding MVP; and
decoding an MV encoding mode: If the encoding mode is encoding the MVD, the MVD is further decoded, and after being added with the MVP, the decoded MVD is then output as a current decoded MV; and if the encoding mode is skipping encoding the MVD, the MVP is directly output as a decoded MV.

It should be noted that, in a process in which the decoder side constructs the MVP candidate list and performs adaptive resorting, except that the neighboring decoded MV is used, a remaining process is completely the same as that of the encoder side, and details are not described herein again.

(3) Displacement decoding module

In the displacement decoding module, a decoding manner of displacement needs to be determined according to an auxiliary information identifier. If the auxiliary information indicates that displacement information is encoded through the video encoder, the decoder side invokes a corresponding video decoder to decode a displacement bitstream. If the auxiliary information indicates that displacement information is encoded through the entropy encoder, the entropy decoder is directly used for decoding.

For the decoded displacement information, a displacement reconstruction module further needs to be used to obtain a displacement vector corresponding to a vertex of a reconstructed subdivided mesh. An operation of the displacement reconstruction module is mainly to perform, through a quantization parameter and a transform parameter that are indicated by the auxiliary information, inverse quantization, inverse transform, and the like on the decoded displacement information, namely, the wavelet coefficient. In addition, for information about video decoding, corresponding displacement information needs to be first extracted from a two-dimensional image in a sorting manner of the encoder side.

(4) Subdivision

An operation of the subdivision module is the same as a subdivision operation of the encoder side, and a subdivision method of a basemesh, a quantity of times of iteration, and the like are indicated through the auxiliary information.

(5) Reconstruction of a deformed mesh

After decoding and reconstruction of the basemesh and the displacement vector are completed, the deformed mesh is reconstructed according to the two parts. A corresponding displacement vector is added to each vertex of the subdivided mesh, as shown in Formula (7):

$$deformedmesh[i].v[k] = subdivmesh[i].v[k] + displacement[k] \#(7)$$

$subdivmesh[i].v[k]$ is geometrical coordinates of a $k^{th}$ vertex obtained after a basemesh of a current frame (whose index is i) is subdivided, $displacement[k]$ is a space domain displacement vector corresponding to a $k^{th}$ vertex, and $deformedmesh[i].v[k]$ is geometrical coordinates of a $k^{th}$ vertex obtained after a current frame is subdivided and deformed.

(6) Texture map decoding

A texture map decoder is responsible for decoding a texture map bitstream, and the texture map bitstream is decoded by using the video decoder indicated in the auxiliary information. Optional color space conversion is performed on the texture map bitstream to obtain an image format consistent with a texture map input by the encoder side, to obtain a texture map finally output through decoding.

After processing of each module is completed, the deformed mesh reconstructed by the decoder side and a corresponding attribute map are finally obtained, and during subsequent application, the reconstructed deformed mesh and the attribute map are used as input for processing.

The three-dimensional mesh inter-frame prediction method provided in this embodiment of this application may be executed by a three-dimensional mesh inter-frame prediction apparatus. In this embodiment of this application, an example in which the three-dimensional mesh inter-frame prediction apparatus performs the three-dimensional mesh inter-frame prediction method is used to describe the three-dimensional mesh inter-frame prediction apparatus provided in this embodiment of this application.

FIG. 6 is a structural diagram of a three-dimensional mesh inter-frame prediction encoding apparatus according to an embodiment of this application. As shown in FIG. 6, the three-dimensional mesh inter-frame prediction encoding apparatus 600 includes:

a processing module 601, configured to perform first processing on a to-be-encoded three-dimensional mesh, to obtain a basemesh;

a division module 602, configured to perform submesh division on the basemesh, to obtain a P submesh;

a first determining module 603, configured to determine a target encoding mode of a to-be-encoded mesh vertex in the P submesh and a first target motion vector prediction MVP value, where the first target MVP value is one of N MVP values included in a first candidate list, each MVP value in the first candidate list corresponds to one index, and N is an integer greater than 1; and

an encoding module 604, configured to encode the target encoding mode and an index corresponding to the first target MVP value, to obtain a bitstream including first information, where the first information is used to indicate the target encoding mode and the index corresponding to the first target MVP value.

Optionally, the apparatus further includes:

a construction module, configured to construct the first candidate list based on a neighboring encoded mesh vertex of the to-be-encoded mesh vertex in the P submesh.

Optionally, the construction module is further configured to:

obtain L neighboring encoded mesh vertexes and M neighboring encoded mesh vertexes of the to-be-encoded mesh vertex in the P submesh, where L and M are integers greater than 1;

obtain a motion vector MV value of each of the L neighboring encoded mesh vertexes, and determine L first MVP values of a to-be-encoded mesh vertex based on the MV values of the L encoded mesh vertexes;

determine a second MVP value based on MV values respectively corresponding to the M encoded mesh vertexes; and

construct the first candidate list based on the L first MVP values and the second MVP value, where $L+1 \leq N$.

Optionally, the construction module is further configured to:

obtain the MV values respectively corresponding to the M encoded mesh vertexes, and determine an average value of the M MV values as the second MVP value; or

obtain the MV values respectively corresponding to the M encoded mesh vertexes, perform weighted average calculation on the M MV values, and determine a calculation result as the second MVP value.

Optionally, a sorting order of the L first MVP values in the first candidate list is related to first distances, where the first distance is a distance between an encoded mesh vertex corresponding to the first MVP value and the to-be-encoded mesh vertex.

Optionally, the L first MVP values are sorted in ascending order of the first distances.

Optionally, when L+1<N, the construction module is further configured to:

construct a sub-candidate list based on the L first MVP values and the second MVP value; and

perform a zero-padding operation on the sub-candidate list, to obtain the first candidate list including the N MVP values.

Optionally, the apparatus further includes:

a resorting module, configured to resort the N MVP values in the first candidate list, to obtain a resorted first candidate list; and

the first determining module is further configured to:

determine, by the encoder side, the first target MVP value from the resorted first candidate list.

Optionally, the resorting module is further configured to:

obtain a sum of errors between a second target MVP value and a motion vector MV of the neighboring encoded mesh vertex of the to-be-encoded mesh vertex, where the second target MVP value is one of the N MVP values; and

resort the N MVP values based on a sum of errors corresponding to each MVP value in the first candidate list.

Optionally, the N MVP values in the resorted first candidate list are sorted in ascending order of the corresponding sum of errors.

Optionally, the first determining module is further configured to:

obtain, in the first candidate list, a first rate-distortion cost of each MVP value in a first encoding mode and a second rate-distortion cost of each MVP value in a second encoding mode, to obtain N first rate-distortion costs and N second rate-distortion costs; and

determine the first target MVP value in the N MVP values according to the N first rate-distortion costs and the N second rate-distortion costs.

Optionally, a first rate-distortion cost or a second rate-distortion cost that corresponds to the first target MVP value is a smallest one of the N first rate-distortion costs and the N second rate-distortion costs.

Optionally, when the first rate-distortion cost corresponding to the first target MVP value is the smallest one of the N first rate-distortion costs and the N second rate-distortion costs, the target encoding mode is the first encoding mode; or when the second rate-distortion cost corresponding to the first target MVP value is the smallest one of the N first rate-distortion costs and the N second rate-distortion costs, the target encoding mode is the second encoding mode.

Optionally, the first encoding mode is a mode in which encoding is directly performed based on the MVP value, and the second encoding mode is a mode in which encoding is performed based on the MVP value and a motion vector difference MVD value; and

when the target encoding mode is the second encoding mode, the encoding module is further configured to:

encode an MVD value of the to-be-encoded mesh vertex in the P submesh.

Optionally, a target rate-distortion cost is related to a first length difference and a first angle, the first length difference is a difference between a modulus of a third target MVP value and a modulus of an MV value of the to-be-encoded mesh vertex, and the first angle is an angle between the third target MVP value and the MV value of the to-be-encoded mesh vertex; and

the target rate-distortion cost is the first rate-distortion cost or the second rate-distortion cost, and the third target MVP value is one of the N MVP values in the first candidate list.

In this embodiment of this application, the encoder side is not limited to performing encoding in a fixed motion vector prediction manner, but can flexibly select the first target MVP value from the first candidate list to perform motion vector prediction, so that the encoder side encodes the motion vector of the P submesh in a more flexible manner, to help improve accuracy of inter-frame prediction for the P submesh by the encoder side, and also help improve encoding efficiency.

The three-dimensional mesh inter-frame prediction encoding apparatus in the embodiments of this application may be an electronic device, for example, an electronic device having an operating system, or may be a component in the electronic device, for example, an integrated circuit or a chip. The electronic device may be a terminal, or may be a device other than the terminal. For example, the terminal may include but is not limited to the foregoing listed types of terminals, and the another device may be a server, a network attached storage (Network Attached Storage, NAS), or the like. This is not specifically limited in the embodiments of this application.

The three-dimensional mesh inter-frame prediction encoding apparatus provided in this embodiment of this application can implement the processes implemented in the method embodiment in FIG. 2 and achieve a same technical effect. To avoid repetition, details are not described herein again.

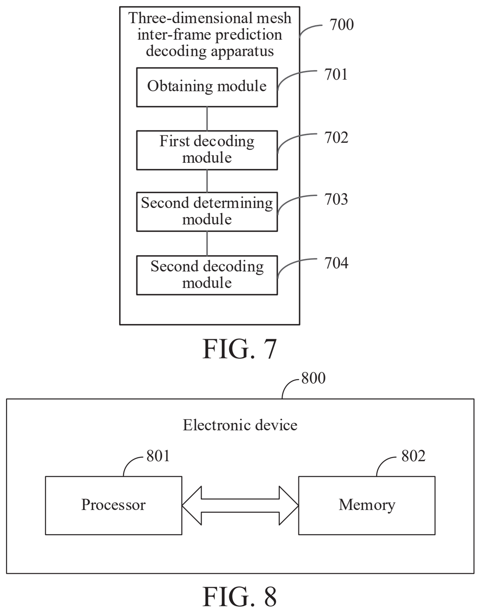

FIG. 7 is a structural diagram of a three-dimensional mesh inter-frame prediction decoding apparatus according to an embodiment of this application. As shown in FIG. 7, the three-dimensional mesh inter-frame prediction decoding apparatus 700 includes:

an obtaining module 701, configured to obtain a bitstream sent by an encoder side, where the bitstream includes a basemesh bitstream;

a first decoding module 702, configured to decode a basemesh type of the basemesh bitstream, to obtain a P submesh bitstream including first information, where the first information is used to indicate a target encoding manner and an index corresponding to a first target MVP value;

a second determining module 703, configured to determine a target encoding mode according to the first information, and determine the first target MVP value from a first candidate list according to the index corresponding to the first target MVP value, where the first candidate list includes N MVP values and an index corresponding to each MVP value, the first target MVP value is one of the N MVP values, and N is an integer greater than 1; and

a second decoding module 704, configured to decode the P submesh bitstream according to the target encoding mode and the first target MVP value, to obtain an MV value of a to-be-decoded mesh vertex in a P submesh.

Optionally, the apparatus further includes:

a construction module, configured to construct the first candidate list based on a neighboring decoded mesh vertex of the to-be-decoded mesh vertex in the P submesh.

Optionally, the construction module is further configured to:

obtain L neighboring decoded mesh vertexes and M neighboring decoded mesh vertexes of the to-be-decoded mesh vertex in the P submesh, where L and M are integers greater than 1;

obtain an MV value of each of the L neighboring decoded mesh vertexes, and determine L first MVP values of the to-be-decoded mesh vertex based on the MV values of the L neighboring decoded mesh vertexes;

determine a second MVP value based on MV values respectively corresponding to the M decoded mesh vertexes; and

construct the first candidate list based on the L first MVP values and the second MVP value, where $L+1 \leq N$.

Optionally, the construction module is further configured to:

obtain the MV values respectively corresponding to the M decoded mesh vertexes, and determine an average value of the M MV values as the second MVP value; or

obtain the MV values respectively corresponding to the M decoded mesh vertexes, perform weighted average calculation on the M MV values, and determine a calculation result as the second MVP value.

Optionally, a sorting order of the L first MVP values in the first candidate list is related to first distances, where the first distance is a distance between a decoded mesh vertex corresponding to the first MVP value and the to-be-decoded mesh vertex.

Optionally, the L first MVP values are sorted in ascending order of the first distances.

Optionally, when L+1<N, the construction module is further configured to:

construct a sub-candidate list based on the L first MVP values and the second MVP value; and

perform a zero-padding operation on the sub-candidate list, to obtain the first candidate list including the N MVP values.

Optionally, the apparatus further includes:

a resorting module, configured to resort the N MVP values in the first candidate list, to obtain a resorted first candidate list; and

the second determining module is further configured to:

determine, by the decoder side according to the index corresponding to the first target MVP value, the first target MVP value from the resorted first candidate list.

Optionally, the resorting module is further configured to:

obtain a sum of errors between a second target MVP value and an MV value of the neighboring decoded mesh vertex of the to-be-decoded mesh vertex, where the second target MVP value is one of the N MVP values; and

resort the N MVP values based on a sum of errors corresponding to each MVP value in the first candidate list.

Optionally, the N MVP values in the resorted first candidate list are sorted in ascending order of the corresponding sum of errors.

Optionally, the target encoding mode is a first encoding mode or a second encoding mode, the first encoding mode is a mode in which encoding is directly performed based on the MVP value, and the second encoding mode is a mode in which encoding is performed based on the MVP value and an MVD value.

Optionally, when the target encoding mode is the second encoding mode, the P submesh bitstream further includes the MVD value, and the second decoding module is further configured to:

perform MVD decoding on the P submesh bitstream, to obtain an MVD value corresponding to the to-be-decoded mesh vertex in the P submesh; and

determine, according to the MVD value corresponding to the to-be-decoded mesh vertex in the P submesh and the first target MVP value, the MV value corresponding to the to-be-decoded mesh vertex.

In this embodiment of this application, the decoder side is not limited to decoding the motion vector of the P submesh in a fixed MV decoding manner, but can use the same manner used by the encoder side, to construct the first candidate list, and determine the first target MVP value from the first candidate list.

The three-dimensional mesh inter-frame prediction decoding apparatus provided in this embodiment of this application can implement the processes implemented in the method embodiment in FIG. 3 and achieve a same technical effect. To avoid repetition, details are not described herein again.

As shown in FIG. 8, an embodiment of this application further provides an electronic device 800, including a processor 801 and a memory 802. The memory 802 stores a program or instructions capable of running on the processor 801. For example, when the communication device 800 is an encoder side, and when the program or the instructions are executed by the processor 801, the steps in the method embodiment of FIG. 2 are implemented, and the same technical effects can be achieved. When the electronic device 800 is a decoder side, and when the program or the instructions are executed by the processor 801, the steps in the method embodiment of FIG. 3 are implemented, and the same technical effects can be achieved. To avoid repetition, details are not described herein again.

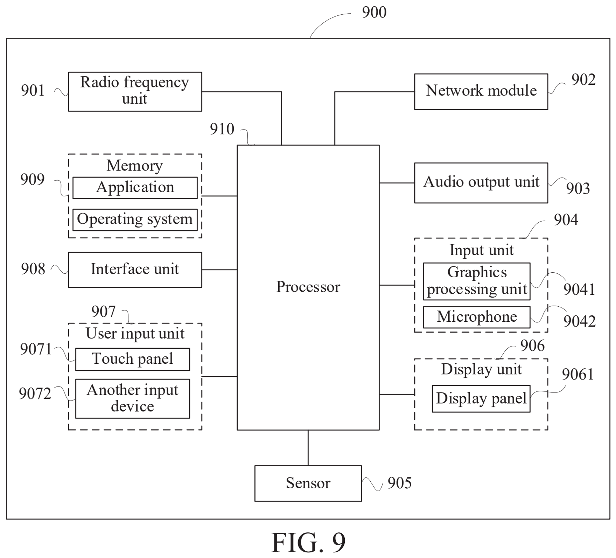

An embodiment of this application further provides an electronic device, including a processor and a communication interface. The communication interface is coupled to the processor, and the processor is configured to run a program or instructions, to implement steps in the method embodiments in FIG. 2 or FIG. 3. The implementation processes and implementations of the foregoing method embodiment are applicable to the electronic device embodiment, and can achieve the same technical effects. Specifically, FIG. 9 is a schematic diagram of a hardware structure of an electronic device according to an embodiment of this application.

The electronic device 900 includes, but is not limited to, at least some components of a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the electronic device 900 may further include a power supply (such as a battery) for supplying power to the components. The power supply may be logically connected to the processor 910 through a power supply management system, to implement functions such as charging, discharging, and power consumption management through the power supply management system. The electronic device structure shown in FIG. 9 does not constitute a limitation on the electronic device, and the electronic device may include more or fewer components than shown, or combine some components, or have different component arrangements. This is not described herein again.

It should be understood that in the embodiments of this application, the input unit 904 may include a graphics processing unit (Graphics Processing Unit, GPU) 9041 and a microphone 9042, and the graphics processing unit 9041 processes image data of still images or videos obtained by an image capture apparatus (for example, a camera) in a video capture mode or an image capture mode. The display unit 906 may include a display panel 9061, and the display panel 9061 may be configured in a form such as a liquid crystal display or an organic light-emitting diode. The user input unit 907 includes at least one of a touch panel 9071 or other input devices 9072. The touch panel 9071 is also referred to as a touchscreen. The touch panel 9071 may include a touch detection apparatus and a touch controller. Other input devices 9072 may include, but are not limited to, physical keyboards, function keys (such as volume control buttons, switch buttons, or the like), trackballs, mouse devices, and joystick, which are not described herein again.

**In** the embodiments of this application, after receiving downlink data from a network side device, the radio frequency unit 901 may transmit the downlink data to the processor 910 for processing. In addition, the radio frequency unit 901 may send uplink data to the network side device. Generally, the radio frequency unit 901 includes, but not limited to, an antenna, an amplifier, a transceiver, a coupler, a low noise amplifier, a duplexer, and the like.

The memory 909 may be configured to store a software program or an instruction and various data. The memory 909 may mainly include a first storage area storing a program or instructions, and a second storage area storing data. The first storage area may store an operating system, an application or instructions needed by at least one function (for example, a sound playback function and an image display function), and the like. In addition, the memory 909 may include a volatile memory or a non-volatile memory 90. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. Volatile memories may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 909 in this embodiment of this application includes, but is not limited to, memories of these and any other proper types.

The processor 910 may include one or more processing units. Optionally, the processor 910 integrates an application processor and a modem processor. The application processor mainly processes and involves in operations of the operating system, a user interface, an application, and the like. The modem processor, for example, a baseband processor, mainly processes a wireless communication signal. It may be understood that, the modem processor may alternatively not be integrated in the processor 910.

When the electronic device 900 is an encoder side, the processor 910 is configured to:

perform first processing on a to-be-encoded three-dimensional mesh, to obtain a basemesh;
perform submesh division on the basemesh, to obtain a P submesh;
determine a target encoding mode of a to-be-encoded mesh vertex in the P submesh and a first target motion vector prediction MVP value, where the first target MVP value is one of N MVP values included in a first candidate list, each MVP value in the first candidate list corresponds to one index, and N is an integer greater than 1; and
encode the target encoding mode and an index corresponding to the first target MVP value, to obtain a bitstream including first information, where the first information is used to indicate the target encoding mode and the index corresponding to the first target MVP value.

Optionally, the electronic device 900 can implement all technical processes in the foregoing encoder side method embodiment, and can achieve same technical effects. To avoid repetition, details are not described herein again.

When the electronic device 900 is a decoder side, the processor 910 is configured to:

obtain a bitstream sent by an encoder side, where the bitstream includes a basemesh bitstream;

decode a basemesh type of the basemesh bitstream, to obtain a P submesh bitstream including first information, where the first information is used to indicate a target encoding manner and an index corresponding to a first target MVP value;

determine a target encoding mode according to the first information, and determine the first target MVP value from a first candidate list according to the index corresponding to the first target MVP value, where the first candidate list includes N MVP values and an index corresponding to each MVP value, the first target MVP value is one of the N MVP values, and N is an integer greater than 1; and

decode the P submesh bitstream according to the target encoding mode and the first target MVP value, to obtain an MV value of a to-be-decoded mesh vertex in a P submesh.

Optionally, the electronic device 900 can implement all technical processes in the foregoing decoder side method embodiment, and can achieve same technical effects. To avoid repetition, details are not described herein again.

An embodiment of this application further provides a readable storage medium. The readable storage medium stores a program or instructions. When the program or the instructions are executed by a processor, processes of the foregoing encoder side method embodiment or the foregoing decoder side method embodiment can be implemented, and same technical effects can be achieved. To avoid repetition, details are not described herein again.

The processor is a processor in the electronic device described in the foregoing embodiment. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement various processes of the encoder side method embodiment or the decoder side method embodiment, and can achieve the same technical effect. To avoid repetition, details are not described herein again.

It should be understood that, the chip mentioned in the embodiments of this application may be further referred to as a system-level chip, a system chip, a chip system, a system-on-chip, or the like.

An embodiment of this application further provides a computer program/program product, where the computer program/program product is stored in a storage medium, and the computer program/program product is executed by at least one processor to perform various processes of the encoder side method embodiment or the decoder side method embodiment, and can achieve the same technical effect. To avoid repetition, details are not described herein again.

It should be noted that, the terms "include", "comprise" or any other variants mean to cover the non-exclusive inclusion, so that the processes, methods, objects, or apparatuses that include a series of elements not only include those elements, but also include other elements that are not clearly listed, or include inherent elements of the processes, methods, objects, or apparatuses. Without more limitations, elements defined by the sentence "including one" does not exclude that there are still other same elements in the processes, methods, objects, or apparatuses. In addition, it should be noted that, the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing descriptions in the implementations, a person skilled in the art can clearly learn that the foregoing embodiment methods may be implemented by using a computer software product in combination with a necessary universal hardware platform. Certainly, the embodiment methods may also be implemented by using hardware. The computer software product is stored in a storage medium (such as a ROM, a RAM, a magnetic disk, or an optical disc), and includes several instructions for enabling an electronic device or a network side device to perform the method described in the embodiments of this application.

The embodiments of this application are described above with reference to the accompanying drawings, but this application is not limited to the foregoing specific implementations, and the foregoing specific implementations are merely exemplary rather than limitative. A person of ordinary skill in the art can further make implementations in many forms under the teaching of this application without departing from the essence of this application and the protection scope of the claims, and all the implementations fall within the protection scope of this application.

**Claims**

1.  A three-dimensional mesh inter-frame prediction encoding method, comprising:

    performing, by an encoder side, first processing on a to-be-encoded three-dimensional mesh, to obtain a basemesh;
    performing, by the encoder side, submesh division on the basemesh, to obtain a P submesh;
    determining, by the encoder side, a target encoding mode of a to-be-encoded mesh vertex in the P submesh and a first target motion vector prediction MVP value, wherein the first target MVP value is one of N MVP values comprised in a first candidate list, each MVP value in the first candidate list corresponds to one index, and N is an integer greater than 1; and
    encoding, by the encoder side, the target encoding mode and an index corresponding to the first target MVP value, to obtain a bitstream comprising first information, wherein the first information is used to indicate the target encoding mode and the index corresponding to the first target MVP value.

2.  The method according to claim 1, wherein before the determining, by the encoder side, a target encoding mode of a to-be-encoded mesh vertex in the P submesh and a first target MVP value, the method further comprises:
    constructing, by the encoder side, the first candidate list based on a neighboring encoded mesh vertex of the to-be-encoded mesh vertex in the P submesh.

3.  The method according to claim 2, wherein the constructing, by the encoder side, the first candidate list based on a neighboring encoded mesh vertex of the to-be-encoded mesh vertex in the P submesh comprises:

    obtaining, by the encoder side, L neighboring encoded mesh vertexes and M neighboring encoded mesh vertexes of the to-be-encoded mesh vertex in the P submesh, wherein L and M are integers greater than 1;
    obtaining, by the encoder side, a motion vector MV value of each of the L neighboring encoded mesh vertexes, and determining L first MVP values of a to-be-encoded mesh vertex based on the MV values of the L encoded mesh vertexes;
    determining, by the encoder side, a second MVP value based on MV values respectively corresponding to the M encoded mesh vertexes; and
    constructing, by the encoder side, the first candidate list based on the L first MVP values and the second MVP value, wherein L+1≤N.

4.  The method according to claim 3, wherein the determining, by the encoder side, a second MVP value based on MV values respectively corresponding to the M encoded mesh vertexes comprises:

    obtaining, by the encoder side, the MV values respectively corresponding to the M encoded mesh vertexes, and determining an average value of the M MV values as the second MVP value; or
    obtaining, by the encoder side, the MV values respectively corresponding to the M encoded mesh vertexes, performing weighted average calculation on the M MV values, and determining a calculation result as the second MVP value.

5.  The method according to claim 3 or 4, wherein a sorting order of the L first MVP values in the first candidate list is related to first distances, wherein the first distance is a distance between an encoded mesh vertex corresponding to the first MVP value and the to-be-encoded mesh vertex.

6.  The method according to claim 5, wherein the L first MVP values are sorted in ascending order of the first distances.

7.  The method according to any one of claims 3 to 6, wherein when L+1<N, the constructing, by the encoder side, the first candidate list based on the L first MVP values and the second MVP value comprises:

    constructing, by the encoder side, a sub-candidate list based on the L first MVP values and the second MVP value; and
    performing, by the encoder side, a zero-padding operation on the sub-candidate list, to obtain the first candidate list comprising the N MVP values.

8.  The method according to any one of claims 2 to 7, wherein after the constructing, by the encoder side, the first candidate list based on a neighboring encoded mesh vertex of the to-be-encoded mesh vertex in the P submesh, the method further comprises:

resorting, by the encoder side, the N MVP values in the first candidate list, to obtain a resorted first candidate list; and

determining the first target MVP value from the first candidate list comprises:

determining, by the encoder side, the first target MVP value from the resorted first candidate list.

9. The method according to claim 8, wherein the resorting, by the encoder side, the N MVP values in the first candidate list comprises:

obtaining, by the encoder side, a sum of errors between a second target MVP value and a motion vector MV of the neighboring encoded mesh vertex of the to-be-encoded mesh vertex, wherein the second target MVP value is one of the N MVP values; and

resorting, by the encoder side, the N MVP values based on a sum of errors corresponding to each MVP value in the first candidate list.

10. The method according to claim 9, wherein the N MVP values in the resorted first candidate list are sorted in ascending order of the corresponding sum of errors.

11. The method according to any one of claims 1 to 10, wherein the determining the first target MVP value comprises:

obtaining, by the encoder side in the first candidate list, a first rate-distortion cost of each MVP value in a first encoding mode and a second rate-distortion cost of each MVP value in a second encoding mode, to obtain N first rate-distortion costs and N second rate-distortion costs; and

determining, by the encoder side, the first target MVP value in the N MVP values according to the N first rate-distortion costs and the N second rate-distortion costs.

12. The method according to claim 11, wherein a first rate-distortion cost or a second rate-distortion cost that corresponds to the first target MVP value is a smallest one of the N first rate-distortion costs and the N second rate-distortion costs.

13. The method according to claim 11 or 12, wherein when the first rate-distortion cost corresponding to the first target MVP value is the smallest one of the N first rate-distortion costs and the N second rate-distortion costs, the target encoding mode is the first encoding mode; or

when the second rate-distortion cost corresponding to the first target MVP value is the smallest one of the N first rate-distortion costs and the N second rate-distortion costs, the target encoding mode is the second encoding mode.

14. The method according to claim 13, wherein the first encoding mode is a mode in which encoding is directly performed based on the MVP value, and the second encoding mode is a mode in which encoding is performed based on the MVP value and a motion vector difference MVD value; and

when the target encoding mode is the second encoding mode, the method further comprises:

encoding, by the encoder side, an MVD value of the to-be-encoded mesh vertex in the P submesh.

15. The method according to any one of claims 11 to 14, wherein a target rate-distortion cost is related to a first length difference and a first angle, the first length difference is a difference between a modulus of a third target MVP value and a modulus of an MV value of the to-be-encoded mesh vertex, and the first angle is an angle between the third target MVP value and the MV value of the to-be-encoded mesh vertex; and

the target rate-distortion cost is the first rate-distortion cost or the second rate-distortion cost, and the third target MVP value is one of the N MVP values in the first candidate list.

16. A three-dimensional mesh inter-frame prediction decoding method, comprising:

obtaining, by a decoder side, a bitstream sent by an encoder side, wherein the bitstream comprises a basemesh bitstream;

decoding, by the decoder side, a basemesh type of the basemesh bitstream, to obtain a P submesh bitstream comprising first information, wherein the first information is used to indicate a target encoding manner and an index corresponding to a first target MVP value;

determining, by the decoder side, a target encoding mode according to the first information, and determining the first target MVP value from a first candidate list according to the index corresponding to the first target MVP value, wherein the first candidate list comprises N MVP values and an index corresponding to each MVP value, the first target MVP value is one of the N MVP values, and N is an integer greater than 1; and

decoding, by the decoder side, the P submesh bitstream according to the target encoding mode and the first target MVP value, to obtain an MV value of a to-be-decoded mesh vertex in a P submesh.

17. The method according to claim 16, wherein before the determining the first target MVP value from a first candidate list according to the index corresponding to the first target MVP value, the method further comprises:
constructing, by the decoder side, the first candidate list based on a neighboring decoded mesh vertex of the to-be-decoded mesh vertex in the P submesh.

18. The method according to claim 17, wherein the constructing, by the decoder side, the first candidate list based on a neighboring decoded mesh vertex of the to-be-decoded mesh vertex in the P submesh comprises:

obtaining, by the decoder side, L neighboring decoded mesh vertexes and M neighboring decoded mesh vertexes of the to-be-decoded mesh vertex in the P submesh, wherein L and M are integers greater than 1;
obtaining, by the decoder side, an MV value of each of the L neighboring decoded mesh vertexes, and determining L first MVP values of the to-be-decoded mesh vertex based on the MV values of the L neighboring decoded mesh vertexes;
determining, by the decoder side, a second MVP value based on MV values respectively corresponding to the M decoded mesh vertexes; and
constructing, by the decoder side, the first candidate list based on the L first MVP values and the second MVP value, wherein L+1≤N.

19. The method according to claim 18, wherein the determining, by the decoder side, a second MVP value based on MV values respectively corresponding to the M decoded mesh vertexes comprises:

obtaining, by the decoder side, the MV values respectively corresponding to the M decoded mesh vertexes, and determining an average value of the M MV values as the second MVP value; or
obtaining, by the decoder side, the MV values respectively corresponding to the M decoded mesh vertexes, performing weighted average calculation on the M MV values, and determining a calculation result as the second MVP value.

20. The method according to claim 18 or 19, wherein a sorting order of the L first MVP values in the first candidate list is related to first distances, wherein the first distance is a distance between a decoded mesh vertex corresponding to the first MVP value and the to-be-decoded mesh vertex.

21. The method according to claim 20, wherein the L first MVP values are sorted in ascending order of the first distances.

22. The method according to any one of claims 18 to 21, wherein when L+1<N, the constructing, by the decoder side, the first candidate list based on the L first MVP values and the second MVP value comprises:

constructing, by the decoder side, a sub-candidate list based on the L first MVP values and the second MVP value; and
performing, by the decoder side, a zero-padding operation on the sub-candidate list, to obtain the first candidate list comprising the N MVP values.

23. The method according to any one of claims 17 to 22, wherein after the constructing, by the decoder side, the first candidate list based on a neighboring decoded mesh vertex of a to-be-decoded mesh vertex in the P submesh, the method further comprises:

resorting, by the decoder side, the N MVP values in the first candidate list, to obtain a resorted first candidate list; and
the determining the first target MVP value from a first candidate list according to the index corresponding to the first target MVP value comprises:
determining, by the decoder side according to the index corresponding to the first target MVP value, the first target MVP value from the resorted first candidate list.

24. The method according to claim 23, wherein the resorting, by the decoder side, the N MVP values in the first candidate list comprises:

obtaining, by the decoder side, a sum of errors between a second target MVP value and an MV value of the neighboring decoded mesh vertex of the to-be-decoded mesh vertex, wherein the second target MVP value is one of the N MVP values; and

resorting, by the decoder side, the N MVP values based on a sum of errors corresponding to each MVP value in the first candidate list.

25. The method according to claim 24, wherein the N MVP values in the resorted first candidate list are sorted in ascending order of the corresponding sum of errors.

26. The method according to any one of claims 16 to 25, wherein the target encoding mode is a first encoding mode or a second encoding mode, the first encoding mode is a mode in which encoding is directly performed based on the MVP value, and the second encoding mode is a mode in which encoding is performed based on the MVP value and an MVD value.

27. The method according to claim 26, wherein when the target encoding mode is the second encoding mode, the P submesh bitstream further comprises the MVD value, and the method further comprises:

performing, by the decoder side, MVD decoding on the P submesh bitstream, to obtain an MVD value corresponding to the to-be-decoded mesh vertex in the P submesh; and

the obtaining an MV value of a to-be-decoded mesh vertex in a P submesh comprises:

determining, according to the MVD value corresponding to the to-be-decoded mesh vertex in the P submesh and the first target MVP value, the MV value corresponding to the to-be-decoded mesh vertex.

28. A three-dimensional mesh inter-frame prediction encoding apparatus, comprising:

a processing module, configured to perform first processing on a to-be-encoded three-dimensional mesh, to obtain a basemesh;

a division module, configured to perform submesh division on the basemesh, to obtain a P submesh;

a first determining module, configured to determine a target encoding mode of a to-be-encoded mesh vertex in the P submesh and a first target motion vector prediction MVP value, wherein the first target MVP value is one of N MVP values comprised in a first candidate list, each MVP value in the first candidate list corresponds to one index, and N is an integer greater than 1; and

an encoding module, configured to encode the target encoding mode and an index corresponding to the first target MVP value, to obtain a bitstream comprising first information, wherein the first information is used to indicate the target encoding mode and the index corresponding to the first target MVP value.

29. A three-dimensional mesh inter-frame prediction decoding apparatus, comprising:

an obtaining module, configured to obtain a bitstream sent by an encoder side, wherein the bitstream comprises a basemesh bitstream;

a first decoding module, configured to decode a basemesh type of the basemesh bitstream, to obtain a P submesh bitstream comprising first information, wherein the first information is used to indicate a target encoding manner and an index corresponding to a first target MVP value;

a second determining module, configured to determine a target encoding mode according to the first information, and determine the first target MVP value from a first candidate list according to the index corresponding to the first target MVP value, wherein the first candidate list comprises N MVP values and an index corresponding to each MVP value, the first target MVP value is one of the N MVP values, and N is an integer greater than 1; and

a second decoding module, configured to decode the P submesh bitstream according to the target encoding mode and the first target MVP value, to obtain an MV value of a to-be-decoded mesh vertex in a P submesh.

30. An electronic device, comprising a processor and a memory, wherein the memory stores a program or instructions executable on the processor, and when the program or the instructions are executed by the processor, steps of the method according to any one of claims 1 to 27 are implemented.

31. A readable storage medium, wherein the readable storage medium stores a program or instructions, and when the program or the instructions are executed by a processor, steps of the method according to any one of claims 1 to 27 are

implemented.

FIG. 1a

FIG. 1b

An encoder side performs first processing on a to-be-encoded three-dimensional mesh, to obtain a basemesh — 201

The encoder side performs submesh division on the basemesh, to obtain a P submesh — 202

The encoder side determines a target encoding mode and a first target MVP value of a to-be-encoded mesh vertex in the P submesh — 203

The encoder side encodes the target encoding mode and an index corresponding to the first target MVP value, to obtain a bitstream including first information, where the first information is used to indicate the target encoding mode and the index corresponding to the first target MVP value — 204

## FIG. 2

A decoder side obtains a bitstream sent by an encoder side, where the bitstream includes a basemesh bitstream — 301

The decoder side performs submesh type decoding on the basemesh bitstream, to obtain a P submesh bitstream including first information, where the first information is used to represent a target encoding manner and an index corresponding to a first target MVP value — 302

The decoder side determines a target encoding mode according to the first information, and determines the first target MVP value from a first candidate list according to the index corresponding to the first target MVP value — 303

The decoder side decodes the P submesh bitstream according to the target encoding mode and the first target MVP value, to obtain an MV value of a to-be-decoded mesh vertex in a P submesh — 304

## FIG. 3

Combine

## FIG. 4a

FIG. 4b

FIG. 4c

FIG. 4d

FIG. 4e

FIG. 4f

FIG. 5a

FIG. 5b

FIG. 6

Three-dimensional mesh inter-frame prediction decoding apparatus — 700

Obtaining module — 701

First decoding module — 702

Second determining module — 703

Second decoding module — 704

FIG. 7

— 800

Electronic device

— 801

Processor

— 802

Memory

FIG. 8

FIG. 9

## INTERNATIONAL SEARCH REPORT

| International application No. |
|---|
| **PCT/CN2024/100840** |

**A.    CLASSIFICATION OF SUBJECT MATTER**

H04N19/172(2014.01)i

According to International Patent Classification (IPC) or to both national classification and IPC

**B.    FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, CNKI, IEEE, JVET: 三维, 立体, 网格, 编码, 编解码, 解码, 子网格, 帧间, 运动向量, 索引, three dimensions, 3d, stereo, mesh, coding, decoding, sub mesh, inter frame, motion vector, MV, MVP, index

**C.    DOCUMENTS CONSIDERED TO BE RELEVANT**

| Category* | Citation of document, with indication, where appropriate, of the relevant passages | Relevant to claim No. |
|---|---|---|
| A | CN 101309412 A (ZHEJIANG UNIVERSITY) 19 November 2008 (2008-11-19)<br>entire document | 1-31 |
| A | CN 104541308 A (INTEL CORP.) 22 April 2015 (2015-04-22)<br>entire document | 1-31 |
| A | US 2021090301 A1 (APPLE INC.) 25 March 2021 (2021-03-25)<br>entire document | 1-31 |
| A | US 2023074762 A1 (TENCENT AMERICA LLC) 09 March 2023 (2023-03-09)<br>entire document | 1-31 |
| A | 朱波 (ZHU, Bo); 彭宗举 (PENG, Zongju); 张云 (ZHANG, Yun); 邵枫 (SHAO, Feng). "面向三维视频系统的深度图压缩方法研究 (Depth Map Compression Algorithm in 3D Video System)"<br>宁波大学学报(理工版) (Journal of Ningbo University(Natural Science & Engineering Edition)). No. 03, 30 September 2009 (2009-09-30),<br>entire document | 1-31 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 September 2024** | **29 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/100840**

| Patent document cited in search report | | | Publication date (day/month/year) | Patent family member(s) | | | Publication date (day/month/year) |
|---|---|---|---|---|---|---|---|
| CN | 101309412 | A | 19 November 2008 | None | | | |
| CN | 104541308 | A | 22 April 2015 | WO | 2014052437 | A1 | 03 April 2014 |
| | | | | US | 2014092439 | A1 | 03 April 2014 |
| | | | | DE | 112013004778 | T5 | 16 July 2015 |
| US | 2021090301 | A1 | 25 March 2021 | US | 11450030 | B2 | 20 September 2022 |
| | | | | US | 2023030913 | A1 | 02 February 2023 |
| | | | | US | 11783508 | B2 | 10 October 2023 |
| | | | | US | 2023401751 | A1 | 14 December 2023 |
| | | | | WO | 2021062044 | A1 | 01 April 2021 |
| US | 2023074762 | A1 | 09 March 2023 | EP | 4205080 | A1 | 05 July 2023 |
| | | | | EP | 4205080 | A4 | 09 August 2023 |
| | | | | KR | 20230087554 | A | 16 June 2023 |
| | | | | JP | 2023552414 | A | 15 December 2023 |
| | | | | WO | 2023039432 | A1 | 16 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310795698X